(19) Europäisches Patentamt

European Patent Office

Office européen des brevets

(11) **EP 0 906 620 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(21) Anmeldenummer: **98907118.8**

(22) Anmeldetag: **23.03.1998**

(51) Int Cl.⁷: **G11B 27/028**, G11B 27/031,
G11B 20/00, G11B 27/30,
G11B 15/02, G11B 19/02,
G11C 7/00, G06F 3/06,
G06F 17/21, H04N 5/765,
H04N 5/44, H04N 7/18,
G08B 15/00

(86) Internationale Anmeldenummer:
**PCT/IB1998/000419**

(87) Internationale Veröffentlichungsnummer:
**WO 1998/045844 (15.10.1998 Gazette 1998/41)**

(54) **EINRICHTUNG UND VERFAHREN ZUM AUFZEICHNEN EINES INFORMATIONSSIGNALES IN EINEM AUFZEICHNUNGSTRÄGER**

DEVICE AND METHOD FOR RECORDING AN INFORMATION SIGNAL IN A RECORDING CARRIER

DISPOSITIF ET PROCEDE POUR ENREGISTRER UN SIGNAL D'INFORMATION DANS UN SUPPORT D'ENREGISTREMENT

(84) Benannte Vertragsstaaten:
**AT DE FR GB**

(30) Priorität: **08.04.1997 EP 97890064**

(43) Veröffentlichungstag der Anmeldung:
**07.04.1999 Patentblatt 1999/14**

(73) Patentinhaber: **Koninklijke Philips Electronics N.V.**
**5621 BA Eindhoven (NL)**

(72) Erfinder: **PROIDL, Adolf**
**NL-5656 AA Eindhoven (NL)**

(74) Vertreter: **Weber, Helmut et al**
**Philips Corporate Intellectual Property**
**Triester Strasse 64**
**1101 Wien (AT)**

(56) Entgegenhaltungen:
**EP-A- 0 227 530     EP-A- 0 376 800**
**EP-A- 0 791 927     EP-B- 0 440 017**
**GB-A- 2 269 930     US-A- 5 465 120**

• **PATENT ABSTRACTS OF JAPAN vol. 097, no. 001, 31.Januar 1997 & JP 08 242423 A (TOSHIBA CORP;TOSHIBA AVE CORP), 17.September 1996,**
• **PATENT ABSTRACTS OF JAPAN vol. 096, no. 007, 31.Juli 1996 & JP 08 077468 A (ONO DENKI KK), 22.März 1996,**
• **PATENT ABSTRACTS OF JAPAN vol. 096, no. 006, 28.Juni 1996 & JP 08 056327 A (SONY CORP), 27.Februar 1996,**

**Beschreibung**

Die Erfindung bezieht sich auf eine Einrichtung zum Aufzeichnen eines von einer Signalquelle angebotenen Informationssignales in einem Aufzeichnungsträger ohne Verlust eines Informationssignalabschnittes am Beginn eines Aufzeichnens, enthaltend Verarbeitungsmittel zum Verarbeiten eines Informationssignales und zum Abgeben eines Aufzeichnungs-Informationssignales sowie Eingabemittel zum Abgeben einer Aktivierungs-Information und einer Warte-Information sowie mit zumindest einem Teil der Verarbeitungsmittel und mit den Eingabemitteln zusammenwirkende Betriebsmittel, mit denen in Abhängigkeit von dem Auftreten einer Aktivierungs-Information ein Aufzeichnen eines Aufzeichnungs-Informationssignales in dem Aufzeichnungsträger bewerkstelligbar ist und mit denen weiters zumindest in Abhängigkeit von dem Auftreten einer Warte-Information ein aufeinanderfolgend überschreibendes Speichern eines Aufzeichnungs-Informationssignales in einem Zwischenspeicher bewerkstelligbar ist und mit denen weiters als Zwischenspeicher 50 ein beliebig festlegbarer Bereich des Aufzeichnungsträgers 34; 71; 81; 85 wählbar ist,
wobei die Betriebsmittel 46 zum Beginnen eines aufeinanderfolgend überschreibenden Speicherns eines Aufzeichnungs-Informationssignales W in einem als Zwischenspeicher 50 gewählten Bereich des Aufzeichnungsträgers 34; 71; 81; 85 in Abhängigkeit von dem Auftreten einer Warte-Information WI ausgebildet sind und
wobei die Betriebsmittel 46 zum Beenden eines aufeinanderfolgend überschreibenden Speicherns eines Aufzeichnungs-Informationssignales W in einem als Zwischenspeicher 50 gewählten Bereich des Aufzeichnungsträgers 34; 71; 81; 85 in Abhängigkeit von dem Auftreten einer Aktivierungs-Information AI ausgebildet sind.

Die Erfindung bezieht sich weiters auf ein Verfahren zum Aufzeichnen eines Informationssignales in einem Aufzeichnungsträger ohne Verlust eines Informationssignalabschnittes am Beginn eines Aufzeichnens, wobei das Verfahren die nachfolgend angeführten Schritte enthält: Verarbeiten eines Informationssignales und Abgeben eines Aufzeichnungs-Informationssignales sowie Erzeugen einer Aktivierungs-Information und einer Warte-Information sowie Aufzeichnen eines Aufzeichnungs-Informationssignales in Abhängigkeit von dem Auftreten einer Aktivierungs-Information sowie aufeinanderfolgend überschreibendes Speichern eines Aufzeichnungs-Informationssignales in einem Zwischenspeicher zumindest in Abhängigkeit von dem Auftreten einer Warte-Information sowie Wählen eines beliebig festlegbaren Bereiches des Aufzeichnungsträgers 34; 71; 81; 85 als Zwischenspeicher 50 sowie
Beginnen eines aufeinanderfolgend überschreibenden Speicherns eines Aufzeichnungs-Informationssignales W in einem als Zwischenspeicher 50 gewählten Bereich des Aufzeichnungsträgers 34; 71; 81;85 in Abhängigkeit von dem Auftreten einer Warte-Information WI sowie
Beenden eines aufeinanderfolgend überschreibenden Speicherns eines Aufzeichnungs-Informationssignales W in einem als Zwischenspeicher 50 gewählten Bereich des Aufzeichnungsträgers 34; 71; 81; 85 in Abhängigkeit von dem Auftreten einer Aktivierungs-Information AI.

Eine solche Einrichtung entsprechend der eingangs im ersten Absatz angeführten Gattung und ein solches Verfahren entsprechend der eingangs im zweiten Absatz angeführten Gattung sind beispielsweise aus dem Dokument GB-A-2 269 930 bekannt.

Die bekannte Einrichtung weist Verarbeitungsmittel auf, die zum Verarbeiten eines von einer Signalquelle angebotenen Informationssignals, das durch ein Audiosignal oder ein Videosignal gebildet ist, und zum Abgeben eines das Informationssignal repräsentierenden Aufzeichnungs-Informationssignals, das durch ein Digitalsignal gebildet ist, an Betriebsmittel ausgebildet sind. Die bekannte Einrichtung weist weiters einen Aufzeichnungsträger auf, von dem unter Zuhilfenahme der Betriebsmittel ein erster Aufzeichnungsbereich als Zwischenspeicher zum aufeinanderfolgend überschreibenden Speichern eines Aufzeichnungs-Informationssignals verwendet wird. Nach einem Auftreten einer Aktivierungs-Information wird das Aufzeichnen in dem ersten Aufzeichnungsbereich beendet und in einem zweiten Aufzeichnungsbereich des Aufzeichnungsträgers fortgesetzt.

Bei der bekannten Einrichtung besteht das Problem, dass eine Zeitinformation zum zeitrichtigen Wiedergeben des in dem Zwischenspeicher und dem zweiten Aufzeichnungsbereich aufgezeichneten Aufzeichnungs-Informationssignals zusätzlich zu dem Aufzeichnungs-Informationssignal aufgezeichnet werden muss, was einen erheblichen Mehraufwand hinsichtlich einem Verwalten dieser Zeitinformation bei dem Aufzeichnen und bei dem Wiedergeben des Aufzeichnungs-Informationssignals verursacht, wodurch unter Umständen das Aufzeichnen bzw. das Wiedergeben verlangsamt wird. Das zusätzliche Speichern der Zeitinformation verursacht weiters einen hohen zusätzlichen Speicherbedarf, so dass der Aufzeichnungsträger nur unökonomisch verwendbar ist.

Die Erfindung hat sich zur Aufgabe gestellt, die vorstehend angeführten Schwierigkeiten bei einer Einrichtung entsprechend der eingangs im ersten Absatz angeführten Gattung zu vermeiden und eine Einrichtung entsprechend der eingangs im ersten Absatz angeführten Gattung sowie ein Verfahren entsprechend der eingangs im zweiten Absatz angeführten Gattung zu verbessern und eine verbesserte Einrichtung sowie ein verbessertes Verfahren zu schaffen, bei denen auf einfache Weise und mit einfachen Mitteln ein Aufzeichnen von Informationssignalen unter optimaler Auswertung des Aufzeichnungssystems ohne Verlust eines Informationssignalabschnittes am Beginn eines Aufzeichnens, also am Beginn eines Aufzeichnungsvorganges gewährleistet ist.

Zur Lösung dieser Aufgabe ist bei einer Einrichtung entsprechend der eingangs im ersten Absatz angeführten Gattung erfindungsgemäß vorgesehen, daß die Betriebsmittel zum Erzeugen und Aufzeichnen eines Aufzeichnungs-Informationssignales ausgebildet sind, das Informations-Signalpakete und Adreß-Signalpakete enthält, wobei die Informations-Signalpakete den Informationssignalen entsprechen und wobei in den Adreß-Signalpaketen Adreßinformationen enthalten sind, mit denen - bei einem Wiedergeben von in einem als Zwischenspeicher gewählten Bereich des Aufzeichnungsträgers aufgezeichneten Informations-Signalpaketen und in weiteren Bereichen des Aufzeichnungsträgers aufgezeichneten Informations-Signalpaketen - die zeitliche Abfolge der wiedergegebenen Informations-Signalpakete zur Reihung derselben festlegbar ist.

Durch die erfindungsgemäßen Maßnahmen ist auf einfache Weise erreicht, dass die Aufzeichnungsdauer in dem Zwischenspeicher, also die Vorspanndauer, durch Auswählen bzw. Festlegen eines beliebig großen Bereiches des Aufzeichnungsträgers als Zwischenspeicher veränderbar, wodurch die maximale Aufzeichnungsdauer des Zwischenspeichers an den jeweiligen Anwendungsfall angepaßt werden kann. Weiters tritt kein zeitverzögertes Aufzeichnen von Aufzeichnungs-Informationssignalen in dem Aufzeichnungträger auf, weshalb keinerlei zeitliche Beschränkungen bezüglich der Benutzung der Einrichtung gegeben sind Weiters ist durch ein Vermeiden des Verwaltens und Speichern von Zeitinformationen der Vorteil erhalten, dass der dem Aufzeichungträger zur Verfügung stehende Speicherplatz optimal ausnutzbar ist und ein wesentlich rascheres Aufzeichnen und Wiedergeben sichergestellt ist, weil zusätzliche Zeitinformationen schlicht weg überflüssig sind und daher auch nicht zusätzlich berücksichtigt werder müssen. Der durch ergibt sich weiters eine erhebliche Kosteneinsparung.

Bei einer erfindungsgemäßen Einrichtung mit den Merkmalen gemäß dem Anspruch 1 hat es sich als vorteilhaft erwiesen, wenn zusätzlich die Maßnahmen gemäß dem abhängigen Anspruch 2 vorgesehen sind. Dadurch ist auf einfache Weise erreicht, daß das in dem Zwischenspeicher unmittelbar vor dem Auftreten einer Aktivierungs-Information aufgezeichnete Informations-Signalpaket bei einem Wiedergeben unmittelbar vor dem in Abhängigkeit von dem Auftreten der Aktivierungs-Information als erstes in dem Aufzeichnungträger aufgezeichneten Informations-Signalpaket wiedergegeben wird. Hierbei gibt die Reihungs-Adreßinformation die Position jenes Informations-Signalpaketes auf dem Aufzeichnungträger an, welches in Abhängigkeit von dem Auftreten der Aktivierungs-Information als erstes in dem Aufzeichnungträger aufgezeichnet wurde.

Bei einer erfindungsgemäßen Einrichtung mit den Merkmalen gemäß dem abhängigen Anspruch 2 hat es sich weiters als vorteilhaft erwiesen, wenn zusätzlich die Maßnahmen gemäß dem abhängigen Anspruch 3 vorgesehen sind. Auf diese Weise ist eine Einrichtung erhaiten, bei der bei einer Wiedergabe auch nur ein Teil der in dem Zwischenspeicher aufgezeichneten Informations-Signalpakete in die auf dem Aufzeichnungträger aufgezeichneten Informations-Signalpakete eingereiht werden kann. Folglich ist die Vorspanndauer, während der Informations-Signalpakete aus dem Zwischenspeicher wiedergegeben werden, innerhalb einer Zeitdauer, die nicht langer als die maximale Aufnahmedauer in dem Zwischenspeicher ist, frei wählbar und kann an den jeweiligen Anwendungsfall angepaßt werden. Ein derartiges Anpassen der Vorspanndauer an einen Anwendungsfall kann auch nachträglich erfolgen.

Bei einer erfindungsgemäßen Einrichtung mit den Merkmalen gemäß dem abhängigen Anspruch 3 hat es sich weiters als vorteilhaft erwiesen, wenn zusätzlich die Maßnahmen gemäß dem abhängigen Anspruch 4 vorgesehen sind. Auf diese Weise ist erreicht, daß als Vorspanndauer die maximale Aufzeichnungsdauer in einem einer Warte-Information und einer Aktivierungs-Information zugeordneten Zwischenspeicher verwendet wird und bei einem Wiedergeben alle in dem Zwischenspeicher gespeicherten Informations-Signalpakete zwischen dem auf dem Aufzeichnungträger vor dem Auftreten der Warte-Information aufgezeichneten Informations-Signalpaket und dem in Abhängigkeit von dem Auftreten der Aktivierungs-Information auf dem Aufzeichnungträger aufgezeichneten Informations-Signalpaket eingereiht werden. Somit werden alle auf dem Aufzeichnungträger aufgezeichneten Aufzeichnungs-Informationssignale bei einem Wiedergeben wiedergegeben und die Aufzeichnungskapazität des Aufzeichnungsträgers wird besonders vorteilhaft ausgenutzt.

Bei einer erfindungsgemäßen Einrichtung mit den Merkmalen gemäß dem abhängigen Anspruch 3 hat es sich weiters auch als vorteilhaft erwiesen, wenn zusätzlich die Maßnahmen gemäß dem abhängigen Anspruch 5 vorgesehen sind. Auf diese Weise ist erreicht, daß die Vorspanndauer auf eine bestimmte immer gleiche Zeitdauer entsprechend dem bestimmten Abstand festgelegt ist und Informationssignale, die während dieser fixen Vorspanndauer vor dem Auftreten einer Aktivierungs-Information aufgezeichnet wurden, vor den nach dem Auftreten der Aktivierungsinformation aufgezeichneten Informations-Signalpaketen wiedergebbar sind. Weiters besteht die Möglichkeit die Vorspanndauer nachträglich auf die maximale Aufzeichnungsdauer in dem Zwischenspeicher zu verlängern.

Bei einer erfindungsgemäßen Einrichtung mit den Merkmalen gemäß dem abhängigen Anspruch 2 hat es sich weiters auch als vorteilhaft erwiesen, wenn die Maßnahmen gemäß dem abhängigen Anspruch 6 vorgesehen sind. Damit ist auf einfache Weise erreicht, daß Adreßinformationen in Adreß-Signalpaketen durch Reihungs-Adreßinformationen auch nachträglich überschrieben werden können und folglich ein einem Adreß-Signalpaket zugeordnetes Informations-Signalpaket auch nachträglich umreihbar ist. Weiters wird dadurch die Aufzeichnungskapazität in dem Aufzeichnungträger bestmöglich ausgenutzt. Es sei erwähnt, daß die Maßnahmen gemäß dem abhängigen Anspruch 6 auch bei erfindungsgemäßen Einrichtungen mit den Merkmalen gemäß den abhängigen Ansprüchen 3, 4 und 5 vorteilhaft einsetzbar sind.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem abhängigen Anspruch 7 vorgesehen sind. Auf diese Weise ist erreicht, daß in einem Anwendungsfall, bei dem die Zeitdauer vom Auftreten einer Warte-Information bis zum Auftreten einer Aktivierungs-Information kleiner ist als die maximale Aufzeichnungsdauer in dem Zwischenspeicher, die in dem Zwischenspeicher aufgezeichneten Informations-Signalpakete ohne Überschreiben einer Adreßinformation durch eine Reihungs-Adreßinformation in ihrer zeitlichen Abfolge in die auf dem Aufzeichnungsträger aufgezeichneten Informations-Signalpakete eingereiht sind. Folglich ist eine im Fachgebiet der Computertechnik bekannte Defragmentierung von Informations-Signalpaketen nicht notwendig.

Bei einer derartigen Defragmentierung von Informations-Signalpaketen werden Informations-Signalpakete, die aufgrund von Reihungs-Adreßinformationen bei einer Wiedergabe unmittelbar aufeinanderfolgend wiedergegeben werden, in angrenzende Bereiche auf dem Aufzeichnungsträger umgespeichert. Damit kann bei einem Wiedergeben schneller auf die Informations-Signalpakete zugegriffen werden. In einer erfindungsgemäßen Einrichtung ist in dem beschriebenen Anwendungsfall keine Defragmentierung von Informations-Signalpaketen nötig, wodurch Verarbeitungszeit in der Einrichtung und Kosten der Einrichtung eingespart werden.

Wenn andererseits die Zeitdauer vom Auftreten einer Warte-Information bis zum Auftreten einer Aktivierungs-Information größer ist als die maximale Aufzeichnungsdauer in dem Zwischenspeicher, dann ist das unmittelbare Aneinandergrenzen von zeitlich aufeinanderfolgenden Informations-Signalpaketen auf dem Aufzeichnungsträger an höchstens drei Positionen - Beginn des Zwischenspeicherbereichs, Ende des Zwischenspeicherbereichs und Ende der Aufzeichnung im Zwischenspeicher - unterbrochen, wobei die auf dem Aufzeichnungsträger zurückzulegenden Positionierungswege nur durch die Größe des Zwischenspeichers festgelegt werden und somit für jeden Anwendungsfall hinreichend klein gehalten werden können.

Es sei noch erwähnt, daß die Maßnahmen gemäß dem abhängigen Anspruch 7 auch bei erfindungsgemäßen Einrichtungen gemäß den abhängigen Ansprüchen 2, 3, 4, 5 und 6 mit Vorteil einsetzbar sind.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem abhängigen Anspruch 8 vorgesehen sind. Bei einem derartigen Speicher mit einem wahlfreien oder einem quasi-wahlfreien Zugriff, bei dem eine Speicheradresse eines Informations-Signalpaketes von einem beliebigen Bereich des Aufzeichnungsträgers zum Aufzeichnen eines Informations-Signalpaketes und zum Wiedergeben des Informations-Signalpaketes besonders schnell aufgefunden werden kann, kann ein Zwischenspeicher durch einen beliebig festlegbaren Bereich des Aufzeichnungsträgers besonders gut realisiert werden. Die Maßnahmen gemäß dem abhängigen Anspruch 8 sind auch bei erfindungsgemäßen Einrichtungen gemäß den abhängigen Ansprüchen 2, 3, 4, 5, 6 und 7 vorteilhaft einsetzbar.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem Anspruch 9 vorgesehen sind. Auf diese Weise kann eine erfindungsgemäße Einrichtung besonders kostengünstig sowie kompakt und mechanisch robust realisiert werden. Die Maßnahmen gemäß dem abhängigen Anspruch 9 können aber auch bei allen anderen vorstehend angeführten erfindungsgemäßen Einrichtungen vorgesehen sein.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem Anspruch 10 vorgesehen sind. Auf diese Weise kann eine Vielzahl von Aufzeichnungsträgern jeweils einzeln aufeinanderfolgend in der Einrichtung verarbeitet werden. Die Maßnahmen gemäß dem abhängigen Anspruch 10 können aber auch bei allen anderen vorstehend angeführten erfindungsgemäßen Einrichtungen vorgesehen sein.

Bei einer erfindungsgemäßen Einrichtung mit den Merkmalen gemäß dem abhängigen Anspruch 10 hat es sich weiters als vorteilhaft erwiesen, wenn zusätzlich die Maßnahmen gemäß dem Anspruch 11 vorgesehen sind. In einem Halbleiterspeicher als Aufzeichnungsträger kann ein Bereich des Aufzeichnungsträgers besonders einfach als Zwischenspeicher festgelegt werden. Weiters weist ein Halbleiterspeicher keine bewegten Teile auf, weshalb eine lange Lebensdauer der erfindungsgemäßen Einrichtung erreicht ist.

Bei einer erfindungsgemäßen Einrichtung mit den Merkmalen gemäß dem abhängigen Anspruch 10 hat es sich auch als vorteilhaft erwiesen, wenn zusätzlich die Maßnahmen gemäß dem Anspruch 12 vorgesehen sind. Mit einer auf optische Weise abtastbaren Platte, die beispielsweise durch eine DVD-RAM, eine MO-Disk, eine CD-Rewriteable oder eine MD-Disk gebildet sein kann, kann auch ein sehr großer Bereich des Aufzeichnungsträgers besonders einfach und kostengünstig als Zwischenspeicher festgelegt werden.

Bei einer erfindungsgemäßen Einrichtung mit den Merkmalen gemäß dem abhängigen Anspruch 10 hat es sich auch als vorteilhaft erwiesen, wenn zusätzlich die Maßnahmen gemäß dem Anspruch 13 vorgesehen sind. Mit einer auf magnetische Weise abtastbaren Platte, die beispielsweise durch eine Harddisk-Einrichtung gebildet sein kann, werden besonders kurze Zugriffszeiten auf auf dem Aufzeichnungsträger aufgezeichnete Informations-Signalpakete erreicht, weshalb Informations-Signalpakete mit einer sehr hohen Datenrate, beispielsweise Videosignale, von einer derartigen Platte mit ausreichender Wiedergabegeschwindigkeit wiedergebbar sind.

Bei einer erfindungsgemäßen Einrichtung mit den Merkmalen gemäß dem abhängigen Anspruch 10 hat es sich weiters auch als vorteilhaft erwiesen, wenn zusätzlich die Maßnahmen gemäß dem Anspruch 14 vorgesehen sind. Auf diese Weise kann in einer erfindungsgemäßen Einrichtung ein Magnetband, das als Massenspeicher sehr kostengünstig ist, als Aufzeichnungsträger verwendet werden.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem Anspruch 15 vorgesehen sind. Auf diese Weise ist ein kostengünstiger Videorecorder erhalten, bei dem eine verspätete Aufnahmeentscheidung zu keinem Verlust eines Informationsabschnittes am Beginn eines Aufzeichnens führt. Die Maßnahmen gemäß dem abhängigen Anspruch 15 können aber auch bei allen anderen vorstehend angeführten erfindungsgemäßen Einrichtungen vorgesehen sein.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem Anspruch 16 vorgesehen sind. Auf diese Weise ist eine kostengünstige Diktiereinrichtung erhalten, bei der eine verspätete Aufnahmeentscheidung zu keinem Verlust eines Sprachsignalabschnittes am Beginn eines Aufzeichnens führt, wobei bei der vorzugsweisen sprachgesteuerten Ausbildung vorteilhafterweise eine Diktiereinrichtung zum Aufzeichnen von Sprachsignalen erhalten ist, die auch bei einer durch einen Schwellwertdetektor gesteuerten Aufnahme einen Verlust eines Sprachsignalabschnittes am Beginn eines Aufzeichnens verhindert. Die Maßnahmen gemäß dem abhängigen Anspruch 16 können aber auch bei allen anderen vorstehend angeführten erfindungsgemäßen Einrichtungen vorgesehen sein.

Bei einer erfindungsgemäßen Einrichtung mit den Merkmalen gemäß dem Anspruch 1 hat es sich weiters auch als vorteilhaft erwiesen, wenn zusätzlich die Maßnahmen gemäß dem Anspruch 17 vorgesehen sind. Auf diese Weise können von der Datenspeichereinrichtung empfangene Digitaldaten auf Richtigkeit und Relevanz für den Benutzer geprüft werden und bei Vorliegen eines positiven Prüfungsergebnisses können die Digitaldaten ohne Verlust eines Digitaldatenabschnittes am Beginn des Aufzeichnens aufgezeichnet werden.

Zur Lösung der vorstehend erläuterten Aufgabe ist ein Verfahren entsprechend der eingangs im zweiten Absatz angeführten Gattung dadurch gekennzeichnet, daß zusätzlich die Maknahmen gemäß dem Kennzeichnenden Teil des Anspruchs 18 vorgesehen sind. Auf diese Weise sind bei einem erfindungsgemäßen Verfahren zu den vorstehend für eine erfindungsgemäße Einrichtung gemäß dem Anspruch 1 erläuterten Vorteilen korrespondierende Vorteile erhalten.

Bezüglich der Vorteile der erfindungsgemäßen Varianten gemäß den abhängigen Ansprüchen 19, 20, 21, 22, 23, 24 und 25 eines erfindungsgemäßen Verfahrens kann auf die vorstehend für die erfindungsgemäßen Varianten gemäß den abhängigen Ansprüchen 2, 3, 4, 5, 6, 7 und 8 einer erfindungsgemäßen Einrichtung hingewiesen werden.

Die vorstehend angeführten Aspekte und weitere Aspekte der Erfindung gehen aus den nachfolgend beschriebenen Ausführungsbeispielen hervor und sind anhand dieser Ausführungsbeispiele erläutert.

Die Erfindung wird im folgenden anhand von vier in den Zeichnungen dargestellten Ausführungsbeispielen weiter beschrieben, auf die die Erfindung aber nicht beschränkt ist.

Die Figur 1 zeigt schematisch ein Videorecorder-Harddisk-Kombinationsgerät, mit dem Videofilme geschnitten werden können und das eine erfindungsgemäße Einrichtung gemäß einem ersten Ausführungsbeispiel der Erfindung enthält.

Die Figur 2 zeigt schematisch einen Bereich einer magnetischen Platte einer Harddisk-Einrichtung der in dem Gerät gemäß der Figur 1 enthaltenen erfindungsgemäßen Einrichtung, in welchem Bereich ein Aufzeichnungs-Informationssignal in Informations-Signalpaketen und Adreß-Signalpaketen gespeichert ist.

Die Figur 3 zeigt analog wie die Figur 2 schematisch einen Bereich der magnetischen Platte der Harddisk-Einrichtung, der einen Zwischenspeicher bildet und bei dem ein Teil der in dem Zwischenspeicher gespeicherten Informations-Signalpakete durch eine Reihungs-Adreßinformation in - in anderen Bereichen des Aufzeichnungsträgers aufgezeichnete - Informations-Signalpakete eingereiht ist.

Die Figur 4 zeigt analog wie die Figuren 2 und 3 schematisch einen weiteren Bereich der magnetischen Platte der Harddisk-Einrichtung, der einen Zwischenspeicher bildet und bei dem zwei Teile der in dem Zwischenspeicher gespeicherten Informations-Signalpakete durch Reihungs-Adreßinformationen in - in anderen Bereichen des Aufzeichnungsträgers aufgezeichnete - Informations-Signalpakete eingereiht sind.

Die Figur 5 zeigt analog wie die Figuren 2, 3 und 4 schematisch einen Bereich der magnetischen Platte der Harddisk-Einrichtung, der einen Zwischenspeicher bildet und bei dem alle in dem Zwischenspeicher gespeicherten Informations-Signalpakete durch Reihungs-Adreßinformationen in - in anderen Bereichen des Aufzeichnungsträgers aufgezeichnete - Informations-Signalpakete eingereiht sind.

Die Figur 6 zeigt schematisch eine Einrichtung gemäß einem zweiten Ausführungsbeispiel der Erfindung, die zum Aufzeichnen von Sprachsignalen als Diktiereinrichtung ausgebildet ist und die von aufzuzeichnenden Sprachsignalen aktivierbar ausgebildet ist.

Die Figur 7 zeigt schematisch eine Einrichtung gemäß einem dritten Ausführungsbeispiel der Erfindung, die als Datenspeichereinrichtung zum Aufzeichnen von von einer Signalquelle angebotenen Digitaldaten ausgebildet ist.

Die Figur 8 zeigt schematisch eine Einrichtung gemäß einem vierten Ausführungsbeispiel der Erfindung, die als Magnetband-Videorecorder zum Aufzeichnen von Videosignalen einer Überwachungskamera während einer sehr langen Überwachungszeitdauer ausgebildet ist.

Die Figur 9 zeigt einen Bereich des einen Aufzeichnungsträger bildenden Magnetbandes, der in dem Magnetband-Videorecorder gemäß der Figur 8 zusätzlich als Zwischenspeicher ausgenutzt wird.

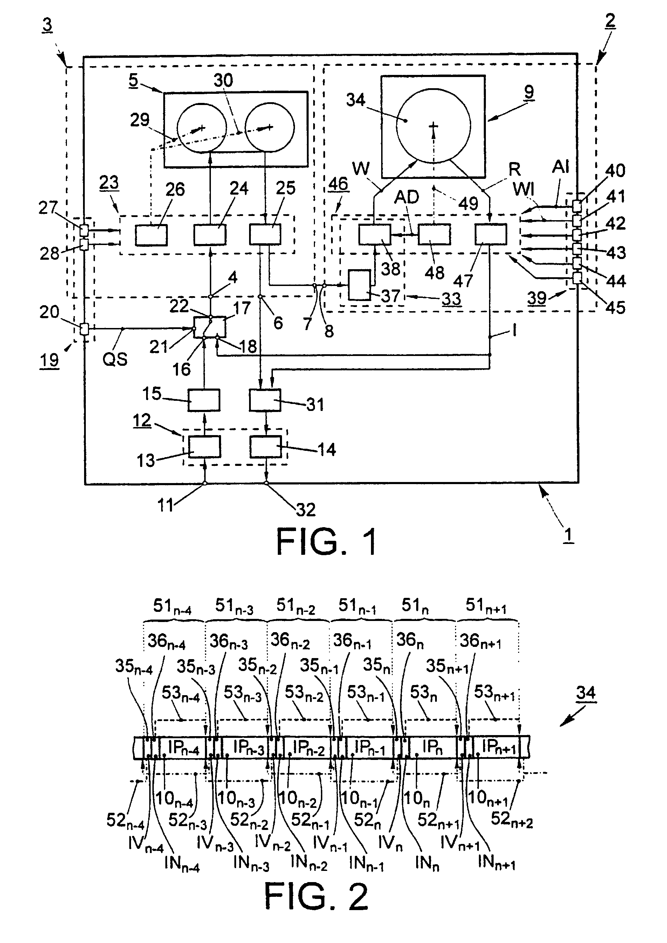

Die Figur 1 zeigt schematisch ein Videorecorder-Harddisk-Kombinationsgerät, das in weiterer Folge als Gerät 1 bezeichnet ist und in dem eine Einrichtung 2 gemäß einem ersten Ausführungsbeispiel der Erfindung vorgesehen ist.

Das Gerät 1 weist einen Magnetband-Videorecorderteil 3 auf, der zum Aufzeichnen eines dem Magnetband-Videorecorderteil 3 an einem Video-Eingang 4 zuführbaren Videosignales auf einer Magnetbandkassette 5 ausgebildet ist. Der Magnetband-Videorecorderteil 3 ist weiters zum Wiedergeben eines auf einer Magnetbandkassette 5 aufgezeichneten Videosignales und zum Abgeben des wiedergegebenen Videosignales an einem ersten Video-Ausgang 6 und einem zweiten Video-Ausgang 7 ausgebildet.

In dem Gerät 1 ist weiters ein Harddisk-Videorecorderteil vorgesehen, der die Einrichtung 2 bildet, welche Einrichtung 2 einen Informationssignal-Eingang 8 aufweist, der mit dem zweiten Video-Ausgang 7 des Magnetband-Videorecorderteiles 3 verbunden ist. Die Einrichtung 2 weist weiters eine Harddisk-Einrichtung 9 auf und ist zum Aufzeichnen eines von dem Magnetband-Videorecorderteil 3, der hierbei eine Signalquelle für die Einrichtung 2 bildet, an den Informationssignal-Eingang 8 der Einrichtung 2 angebbaren Informationssignales in der Harddisk-Einrichtung 9 ohne Verlust eines Informationssignalabschnittes 10 am Beginn eines Aufzeichnens ausgebildet. Die Einrichtung 2 ist weiters zum Wiedergeben von Informationssignalen I von der Harddisk-Einrichtung 9 ausgebildet.

Mit dem Gerät 1 kann ein in dem Magnetband einer Magnetbandkassette 5 aufgezeichneter Videofilm von dem Magnetband-Videorecorderteil 3 wiedergegeben werden, wobei mit der Einrichtung 2 nur die vom Benutzer des Gerätes 1 erwünschten Informationssignalabschnitte des Videofilms auf die magnetische Platte der Harddisk-Einrichtung 9 aufgezeichnet werden können. Somit ist das Gerät 1 als Videoschnittgerät verwendbar.

Das Gerät 1 weist einen Eingang 11 auf, an dem dem Gerät 1 von einer in der Figur 1 nicht dargestellten Signalquelle ein Fernsehsignal zuführbar ist. Das Gerät 1 enthält eine Tuner-Einrichtung 12, die einen Demodulator 13 und einen Modulator 14 aufweist. Der Demodulator 13 ist hierbei an den Eingang 11 des Gerätes 1 angeschlossen, über den dem Demodulator 13 ein an dem Eingang 11 abgegebenes Femsehsignal zuführbar ist. Ein von dem Demodulator 13 demoduliertes Fernsehsignal ist Eingangssignalverarbeitungsmitteln 15 als Videosignal zuführbar. In den Eingangssignalverarbeitungsmitteln 15 wird das Videosignal in bekannter Weise mehreren Filterstufen und Verstärkerstufen, die in der Figur 1 nicht dargestellt sind, zugeführt und verarbeitet. Ein von den Eingangssignalverarbeitungsmitteln 15 abgegebenes verarbeitetes Videosignal ist einem ersten Eingang 16 eines Eingangsquellenumschalters 17 zuführbar. Der Eingangsquellenumschalter 17 weist einen zweiten Eingang 18 auf, an dem dem Eingangsquellenumschalter 17 mit der Harddisk-Einrichtung 9 der Einrichtung 2 wiedergegebene Informationssignale zuführbar sind.

Das Gerät 1 weist Eingabemittel 19 auf, die zum Steuern des Magnetband-Videorecorderteiles 3 vorgesehen sind. Die Eingabemittel 19 enthalten eine Aufnahme-Quellwahltaste 20, von der ein Steuersignal QS an einen Steuereingang 21 des Eingangsquellenumschalters 17 abgebbar ist. In Abhängigkeit von dem von der Aufnahme-Quellwahltaste 20 abgegebenen Steuersignal QS verbindet der Eingangsquellenumschalter 17 seinen ersten Eingang 16 oder seinen zweiten Eingang 18 mit einem Ausgang 22 des Eingangsquellenumschalters 17. Der Ausgang 22 des Eingangsquellenumschalters 17 ist mit dem Video-Eingang 4 des Magnetband-Videorecorderteiles 3 verbunden. Folglich ist durch Betätigen der Aufnahme-Quellwahltaste 20 entweder ein von den Eingangssignalverarbeitungsmitteln 15 abgegebenes verarbeitetes Videosignal oder ein von der Einrichtung 2 wiedergegebenes Informationssignal I an den Video-Eingang 4 des Magnetband-Videorecorderteiles 3 abgebbar.

Der Magnetband-Videorecorderteil 3 weist Betriebsmittel 23 auf, in denen Aufnahme-Verarbeitungsmittel 24, Wiedergabe-Verarbeitungsmittel 25 und Steuermittel 26 vorgesehen sind. Die Aufnahme-Verarbeitungsmittel 24 sind an den Video-Eingang 4 angeschlossen. In den Aufnahme-Verarbeitungsmitteln 24 sind Filterstufen und Verstärkerstufen vorgesehen, die in der Figur 1 nicht dargestellt sind. Mit den Aufnahme-Verarbeitungsmitteln 24 ist ein von dem Video-Eingang 4 her zugeführtes Videosignal in ein auf einem Magnetband der Magnetbandkassette 5 aufzeichenbares Aufzeichnungs-Videosignal verarbeitbar.

Die Eingabemittel 19 weisen in dem Magnetband-Videorecorderteil 3 eine Aufnahmetaste 27 auf, mit der in dem Magnetband-Videorecorderteil 3 eine Aufnahme-Betriebsart aktivierbar ist. Die Steuermittel 26, die in den Betriebsmitteln 23 vorgesehen sind, sind bei aktivierter Aufnahme-Betriebsart zum Steuern des Aufzeichnens von von den Aufnahme-Verarbeitungsmitteln 24 abgegebenen Aufzeichnungs-Videosignalen in dem Magnetband der Magnetbandkassette 5 ausgebildet. Hierfür steuern die Steuermittel 26 über zwei schematisch angedeutete Wirkverbindungen 29 und 30 in bekannter Weise und auf hier nicht näher dargestellte Art die Transportgeschwindigkeit des Magnetbandes bei der Aufnahme-Betriebsart. Das Magnetband wird hierbei entlang einem in der Figur 1 nicht dargestellten Scanner geführt, wobei mittels in diesem Scanner vorgesehene Magnetköpfe bei in dem Magnetband-Videorecorderteil 3 aktivierter Aufnahme-Betriebsart ein Aufzeichnungs-Videosignal auf dem Magnetband aufgezeichnet wird, wie dies seit langem bekannt ist.

Die Eingabemittel 19 weisen weiters eine Wiedergabetaste 28 auf, mit der in dem Magnetband-Videorecorderteil 3 eine Wiedergabe-Betriebsart aktivierbar ist. Die Steuermittel 26 sind bei aktivierter Wiedergabe-Betriebsart zum Steuern der Wiedergabe von in dem Magnetband der Magnetbandkassette 5 aufgezeichneten Aufzeichnungs-Videosignalen ausgebildet. Hierfür steuern die Steuermittel 26 in bekannter Weise die Transportgeschwindigkeit des Magnetbandes der Magnetbandkassette 5 über die beiden Wirkverbindungen 29 und 30. Die in der Wiedergabe-Betriebsart von dem Magnetband der Magnetbandkassette 5 wiedergegebenen Wiedergabe-Videosignale sind den Wiedergabe-Verarbeitungsmitteln 25 zuführbar. In den Wiedergabe-Verarbeitungsmitteln 25 sind Filterstufen und Verstärkerstufen vorgesehen, die in der Figur 1 nicht dargestellt sind. Mit den Wiedergabe-Verarbeitungsmitteln 25 wird ein zugeführtes Wiedergabe-Videosignal verarbeitet, wobei das verarbeitete Videosignal sowohl an den ersten Video-Ausgang 6 als auch an den zweiten Video-Ausgang 7 des Magnetband-Videorecorderteiles 3 abgebbar ist.

Ein an dem ersten Video-Ausgang 6 des Magnetband-Videorecorderteiles 3 abgebbares Videosignal ist Ausgangssignalverarbeitungsmitteln 31 zuführbar. In den Ausgangssignalverarbeitungsmitteln 31 ist ein Videosignal mit Hilfe von Filterstufen und Verstärkerstufen, die in der Figur 1 nicht dargestellt sind, verarbeitbar. Ein von den Ausgangssignalverarbeitungsmitteln 31 abgegebenes verarbeitetes Videosignal ist dem Modulator 14 der Tuner-Einrichtung 12 zuführbar. Ein in dem Modulator 14 moduliertes Videosignal ist an einen Ausgang 32 des Gerätes 1 abgebbar und von diesem Ausgang 32 an ein an den Ausgang 32 anschließbares Gerät, beispielsweise ein Fernsehgerät, welches in der Figur 1 nicht dargestellt ist, abgebbar. Den Ausgangssignalverarbeitungsmitteln 31 sind ebenfalls von der Harddisk-Einrichtung 9 der Einrichtung 2 wiedergebbare Informationssignale I zuführbar, welche Informationssignale I in entsprechender Weise von den Ausgangssignalverarbeitungsmitteln 31 über den Modulator 14 und den Ausgang 32 an ein an den Ausgang 32 anschließbares Fernsehgerät abgebbar sind.

Die Einrichtung 2 weist Verarbeitungsmittel 33 zum Verarbeiten eines der Einrichtung 2 an ihrem Informationssignal-Eingang 8 zugeführten Informationssignales, welches hierbei durch ein von dem Magnetband der Magnetbandkassette 5 wiedergegebenes Videosignal gebildet ist, und zum Abgeben eines Aufzeichnungs-Informationssignales W auf. Ein Aufzeichnungs-Informationssignal W ist in einem Bereich eines Aufzeichnungträgers, der hierbei durch eine magnetisch abtastbare Platte 34 der Harddisk-Einrichtung 9 gebildet ist, speicherbar, und zwar in Informationssignalabschnitten 10 und Vorgängeradreßsignalabschnitten 35 sowie Nachfolgeadreßsignalabschnitten 36, worauf nachfolgend bei der Beschreibung eines Bereiches einer magnetischen Platte 34 gemäß der Figur 2 noch näher eingegangen ist.

Die Verarbeitungsmittel 33 weisen Eingangsverarbeitungsmittel 37 und weitere Aufnahme-Verarbeitungsmittel 38 auf. Die Eingangsverarbeitungsmittel 37 enthalten Filterstufen, eine Analog/Digital-Wandlerstufe, eine Komprimierstufe und Verstärkerstufen, die in der Figur 1 nicht dargestellt sind. Mit den Eingangsverarbeitungsmitteln 37 ist ein von dem Informationssignal-Eingang 8 an die Eingangsverarbeitungsmittel 37 abgebbares Informationssignal verarbeitbar. Ein verarbeitetes Informationssignal ist von den Eingangsverarbeitungsmitteln 37 an die weiteren Aufnahme-Verarbeitungsmittel 38 abgebbar. Die weiteren Aufnahme-Verarbeitungsmittel 38 sind zum Verarbeiten eines ihnen von den Eingangsverarbeitungsmitteln 37 zuführbaren Informationssignales und zum Abgeben eines Aufzeichnungs-Informationssignales W an die Harddisk-Einrichtung 9 ausgebildet, worauf nachfolgend noch näher eingegangen wird.

Die Einrichtung 2 weist weiters weitere Eingabemittel 39 auf, die eine Cut-In-Taste 40, eine Cut-Out-Taste 41, eine Stop-Taste 42, eine weitere Wiedergabetaste 43, eine Positions-Taste 44 sowie eine Reihungs-Taste 45 enthalten. Die weiteren Eingabemittel 39 sind hierbei zum Abgeben von Steuerinformationen an in der Einrichtung 2 vorgesehene weitere Betriebsmittel 46 ausgebildet. Die weiteren Betriebsmittel 46 weisen die weiteren Aufnahme-Verarbeitungsmittel 38 sowie weitere Wiedergabe-Verarbeitungsmittel 47 und weitere Steuermittel 48 auf. Die weiteren Steuermittel 48 sind über eine weitere Wirkverbindung 49 in bekannter Weise zum Steuern der Drehzahl der magnetischen Platte 34 und der Position eines Magnetkopfes, der in der Figur 1 nicht dargestellt ist, in Bezug auf die magnetische Platte 34 in einer Aufzeichnungs-Betriebsart und einer Wiedergabe-Betriebsart ausgebildet. Die weiteren Steuermittel 48 sind weiters zum Erzeugen einer der jeweiligen Position des Magnetkopfes entsprechenden Adreßinformation AD und zum Abgeben dieser Adreßinformation AD an die weiteren Aufnahme-Verarbeitungsmittel 38 ausgebildet.

Die weiteren Wiedergabe-Verarbeitungsmittel 47 weisen eine Digital/Analog-Wandlerstufe, eine Dekomprimierstufe sowie Filterstufen und Verstärkerstufen auf, die in der Figur 1 nicht dargestellt sind. Die weiteren Wiedergabe-Verarbeitungsmittel 47 sind zum Verarbeiten von Wiedergabe-Informationssignalen R vorgesehen.

Von der Cut-In-Taste 40 ist eine Aktivierungs-Information AI an die weiteren Betriebsmittel 46 abgebbar, womit in der Einrichtung 2 eine Kontinuierlich-Aufnahme-Betriebsart aktivierbar ist. Bei aktivierter Kontinuierlich-Aufnahme-Betriebsart sind die weiteren Betriebsmittel 46 zum kontinuierlichen Aufzeichnen eines Aufzeichnungs-Informationssignales W auf der magnetischen Platte 34 der Harddisk-Einrichtung 9 ausgebildet, wie dies in der Figur 2 dargestellt ist.

Von der Cut-Out-Taste 41 ist eine Warte-Information WI an die weiteren Betriebsmittel 46 abgebbar, womit in der Einrichtung 2 eine Warte-Aufnahme-Betriebsart aktivierbar ist. Die weiteren Betriebsmittel 46 sind zum Festlegen eines Bereiches der magnetischen Platte 34 als Zwischenspeicher 50 ausgebildet; ein solches Festlegen erfolgt, wenn in der Einrichtung 2 die Warte-Aufnahme-Betriebsart aktiviert ist. Die weiteren Betriebsmittel 46 sind weiters zum Beginnen eines aufeinanderfolgend überschreibenden Speicherns eines Aufzeichnungs-Informationssignales W in dem als Zwischenspeicher 50 gewählten Bereich der magnetischen Platte 34 in Abhängigkeit von dem Auftreten einer Warte-Information WI ausgebildet; ein solches Beginnen erfolgt, wenn in der Einrichtung 2 die Warte-Aufnahme-Betriebsart aktiviert ist. Die weiteren Betriebsmittel 46 sind weiters zum Beenden eines aufeinanderfolgend überschreibenden Speicherns eines Aufzeichnungs-Informationssignales W in dem Zwischenspeicher 50 in Abhängigkeit von dem Auftreten einer Aktivierungs-Information AI ausgebildet; ein solches Beenden erfolgt, wenn in der Einrichtung 2 die Warte-Aufnahme-Betriebsart aktiviert war und hierauf die Kontinuierlich-Aufnahme-Betriebsart aktiviert wird.

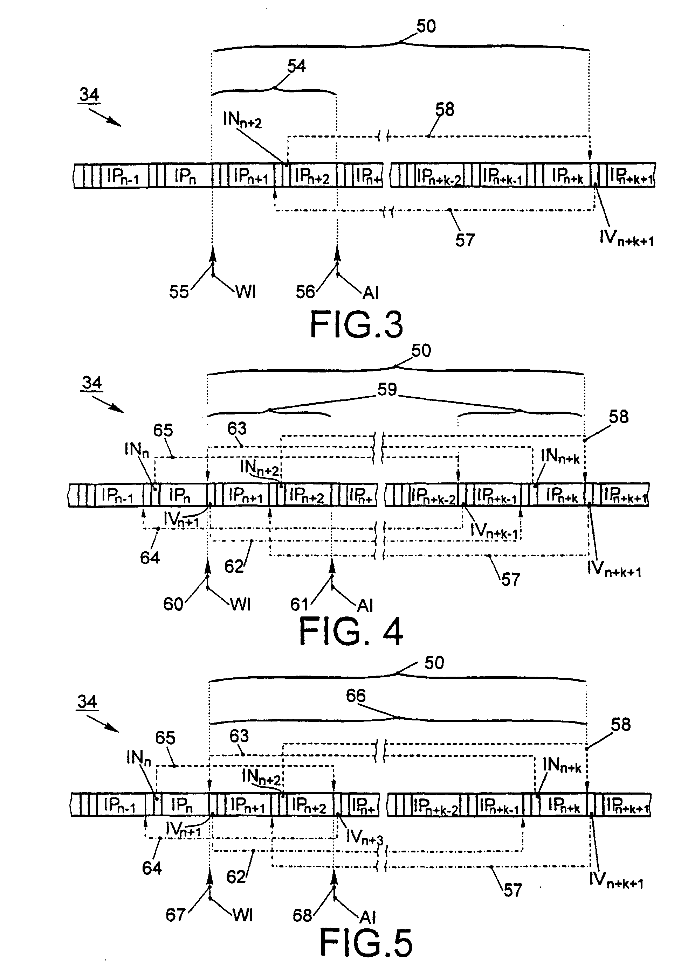

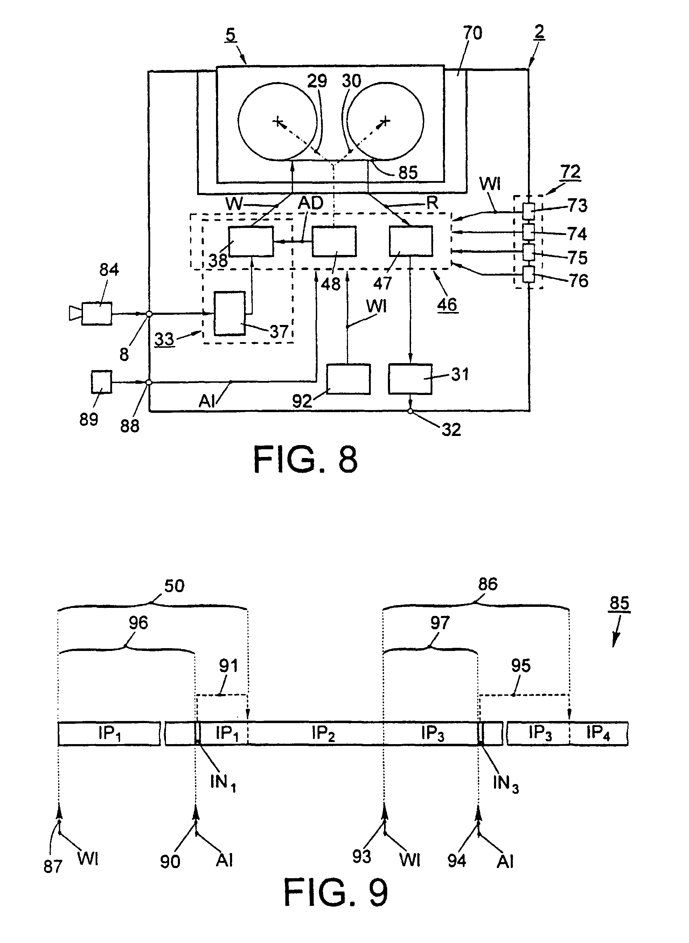

In der Figur 2 ist schematisch ein Bereich der magnetischen Platte 34 der Harddisk-Einrichtung 9 der Einrichtung 2 dargestellt, in dem ein Aufzeichnungs-Informationssignal W gespeichert ist, und zwar in Informationssignalabschnitten 10 sowie Adreßsignalabschnitten, die durch Vorgängeradreßsignalabschnitte 35 und Nachfolgeadreßsignalabschnitte 36 gebildet sind. In Informationssignalabschnitten 10 auf der magnetischen Platte 34 aufgezeichnete Informations-Signalpakete IP entsprechen den Informationssignalen, weil die der Einrichtung 2 an ihrem Informationssignal-Eingang 8 zugeführten Informationssignale in den Eingangsverarbeitungsmitteln 37 mit der Analog/Digital-Wandlerstufe digitalisiert werden und mit der Komprimierstufe komprimiert werden und danach als komprimiertes Digitalsignal in den Informations-Signalpaketen IP aufgezeichnet werden. Es sei erwähnt, daß Informationssignale auch als Analog-Signale in Informations-Signalpaketen IP speicherbar sind, wie dies anhand der in der Figur 8 dargestellten Einrichtung gemäß einem vierten Ausführungsbeispiel der Erfindung beschrieben ist. In Adreßsignalabschnitten auf der magnetischen Platte 34 aufgezeichnete Vorgängeradreßpakete IV und Nachfolgeadreßpakete IN enthaltenen Adreßinformationen AD, mit denen - bei einem Wiedergeben von in einem als Zwischenspeicher 50 (siehe die Figur 3) gewählten Bereich der magnetischen Platte 34 aufgezeichneten Informations-Signalpaketen IP und in weiteren Bereichen der magnetischen Platte 34 aufgezeichneten Informations-Signalpaketen IP - die zeitliche Abfolge der wiedergegebenen Informations-Signalpakete IP zur Reihung derselben festlegbar ist. Hierbei ist einem Informations-Signalpaket $IP_n$ ein Vorgängeradreßpaket $IV_n$ und ein Nachfolgeadreßpaket $IN_n$ zugeordnet, welche drei Pakete ein Gesamt-Paket $51_n$ bilden.

In dem Vorgängeradreßpaket $IV_n$ des Gesamt-Paketes $51_n$ ist eine Adreßinformation AD gespeichert, die eine Position auf der magnetischen Platte 34 angibt, die in der Figur 2 symbolisch mit einer Vorgänger-Pointerverbindung $52_n$ gekennzeichnet ist. Die Vorgänger-Pointerverbindung $52_n$ kennzeichnet die Position auf der magnetischen Platte 34, ab der auf der magnetischen Platte 34 das Gesamt-Paket $51_{n-1}$ gespeichert ist. In dem Nachfolgeadreßpaket $IN_n$ des Gesamt-Pakets $51_n$ ist eine Adreßinformation AD gespeichert, die eine Position auf der magnetischen Platte 34 angibt, die in der Figur 2 symbolisch mit einer Nachfolger-Pointerverbindung $53_n$ gekennzeichnet ist. Die Nachfolger-Pointerverbindung $53_n$ kennzeichnet die Position auf der magnetischen Platte 34, ab der auf der magnetischen Platte 34 das Gesamt-Paket $51_{n+1}$ gespeichert ist.

In einer Wiedergabe-Betriebsart, die in der Einrichtung 2 durch Betätigen der weiteren Wiedergabetaste 43 aktivierbar ist, ist die Reihenfolge der wiedergegebenen Informations-Signalpakete IP durch die in den Vorgängeradreßpaketen IV und in den Nachfolgeadreßpaketen IN gespeicherten Adreßinformationen AD festgelegt. In der Wiedergabe-Betriebsart werden die durch Steuerung mit den weiteren Steuermitteln 48 in der richtigen Reihenfolge wiedergegebenen Gesamtpakete 51, die das Wiedergabe-Informationssignal R bilden, in den weiteren Wiedergabe-Verarbeitungsmitteln 47 mit der Dekomprimierstufe dekomprimiert und mit der Digital/Analog-Wandlerstufe in ein Analog-Signal gewandelt, das als wiedergegebenes Informationssignal I sowohl an den zweiten Eingang 18 des Eingangsquellenumschalter 17 als auch an die Ausgangssignalverarbeitungsmittel 31 abgebbar ist.

Eine auf diese Weise festgelegte Reihung von Informations-Signalpaketen IP mit Vorgängeradreßpaketen IV und Nachfolgeadreßpaketen IN ist in der Computertechnik als doppelt verkettete Liste bekannt. Es sei erwähnt, daß die erfindungsgemäßen Maßnahmen auch im Zusammenhang mit einer einfachen verketteten Liste durchführbar sind, wobei bei einer derartigen einfach verketteten Liste eine Reihung von Informations-Signalpaketen IP entweder nur durch Vorgängeradreßpakete IV oder nur durch Nachfolgeadreßpaktete IN erfolgt, worauf im vierten Ausführungsbeispiel der Erfindung noch näher eingegangen ist. Sollen die Informations-Signalpakete sowohl in einer normalen Wiedergabe als auch in einer Rückwärts-Wiedergabe, vergleichbar einem physikalischen Film, wiedergebbar sein, so ist der Einsatz einer doppelt verketteten Liste unerläßlich.

Die Figur 3 zeigt schematisch einen Bereich der magnetischen Platte 34 der Harddisk-Einrichtung 9 der Einrichtung 2, der einen Zwischenspeicher 50 bildet und bei dem in einem ersten Einbindungs-Teil 54 gespeicherte Informations-Signalpakete IP in - in anderen Bereichen der magnetischen Platte 34 aufgezeichnete - Informations-Signalpakete IP eingereiht sind. In der Figur 3 sowie in den nachfolgenden Figuren 4 und 5 sind Vorgänger-Pointerverbindungen und Nachfolger-Pointerverbindungen nur für Reihungs-Adreßinformationen IR dargestellt.

Wenn das Gerät 1 als Videoschnittgerät verwendet wird und ein auf dem Magnetband einer Magnetbandkassette 5 aufgezeichneter Videofilm geschnitten werden soll und hierbei vom Benutzer des Gerätes 1 nur erwünschte Informationssignalabschnitte des Videosignales des Videofilmes auf der Harddisk-Einrichtung 9 aufgezeichnet werden sollen, dann ist durch Betätigen der Wiedergabetaste 28 des Magnetband-Videorecorderteiles 3 das Videosignal von dem Magnetband der Magnetbandkassette 5 wiedergebbar. Der wiedergegebene Videofilm kann von dem Benutzer des Gerätes 1 mit Hilfe eines an den Ausgang 32 des Gerätes 1 angeschlossenen Fersehgerätes betrachtet werden.

Während des Betrachtens des Videofilmes kann der Benutzer des Gerätes 1 durch Betätigen der Cut-In-Taste 40 einen erwünschten Abschnitt des Videofilmes in der magnetischen Platte 34 speichern und durch Betätigen der Cut-Out-Taste 41 am Beginn eines unerwünschten Abschnittes des Videofilmes das zuvor durch Betätigen der Cut-In-Taste 40 aktivierte Speichern wieder beenden. Da der Benutzer des Gerätes 1 beim Betrachten des Videofilmes entscheidet, ob der eben gezeigte Abschnitt des Videofilmes erwünscht oder unerwünscht ist, erfolgt die Aufnahmeentscheidung des Benutzers durch Betätigen der Cut-In-Taste 40 meistens zu spät. Um trotz einer verspäteten Aufnahmeentscheidung durch den Benutzer keinen Abschnitt des Videofilmes am Beginn des Aufzeichnens zu verlieren, wird der Videofilm nach einem Betätigen der Cut-Out-Taste 41 in dem Zwischenspeicher 50 aufeinanderfolgend überschreibend gespeichert. Somit kann für eine vom Benutzer des Gerätes 1 gewählte Vorspanndauer, die nicht größer als die maximale Aufzeichnungsdauer in dem Zwischenspeicher 50 ist, ein vor dem Betätigen der Cut-In-Taste 40 von dem Magnetband-Videorecorderteil 3 wiedergegebener Abschnitt des Videofilmes bei einer Wiedergabe von der Harddisk-Einrichtung 9 wiedergegeben werden und geht somit nicht verloren. Die maximale Aufzeichnungsdauer in dem Zwischenspeicher 50 kann beispielsweise zehn (10) Sekunden und die eingestellte Vorspanndauer fünf (5) Sekunden betragen, wobei von dem Benutzer des Gerätes 1 auch nach der Aufnahme nachträglich eine andere Vorspanndauer festlegbar ist, worauf nachfolgend noch näher eingegangen wird.

Durch Betätigen der Cut-In-Taste 40 der Einrichtung 2 ist in der Einrichtung 2 die Kontinuierlich-Aufzeichnungs-Betriebsart aktivierbar und das von dem Magnetband einer Magnetbandkassette 5 wiedergegebene Videosignal als Aufzeichnungs-Informationssignal in der magnetischen Platte 34 der Harddisk-Einrichtung 9 speicherbar. In der Kontinuierlich-Aufzeichnungs-Betriebsart wird das Aufzeichnungs-Informationssignal in in der Figur 2 dargestellten Informationssignalabschnitten 10 und Adreßsignalabschnitten 35 und 36 aufgezeichnet. Hierbei wird beim Auftreten einer ersten Aktivierungs-Information AI die Aufzeichnung in einem ersten Gesamt-Paket $51_1$ begonnen und nachfolgend in dem Gesamt-Paket $51_2$ und den nachgereihten Gesamt-Paketen $51_3$, $51_4$, $51_5$ und weiteren Gesamt-Paketen 51 fortgesetzt.

Wenn der Benutzer des Videorecorders einen Abschnitt des wiedergegebenen Videosignales nicht auf der magnetischen Platte 34 aufzeichnen möchte, dann ist in der Einrichtung 2 durch Betätigen der Cut-Out-Taste 41, womit eine Warte-Information 55 erzeugt wird, die Warte-Aufzeichnungs-Betriebsart aktivierbar. Die weiteren Betriebsmittel 46 sind hierbei zum Festlegen eines als Zwischenspeicher 50 gewählten Bereiches der magnetischen Platte 34 in Abhängigkeit von dem Auftreten einer Warte-Information WI ausgebildet. Die weiteren Betriebsmittel 46 sind insbesondere dazu ausgebildet als Zwischenspeicher 50 einen Bereich der magnetischen Platte 34 festzulegen, der unmittelbar an jenen Bereich der magnetischen Platte 34 anschließt, in dem ein unmittelbar vor dem Auftreten einer Warte-Information WI aufgezeichnetes Informations-Signalpaket $IP_n$ aufgezeichnet ist. Folglich wird beim Aufzeichnen des Gesamtpaketes $51_n$ und beim Auftreten der Warte-Information 55 von den weiteren Betriebsmitteln 46 ein Bereich der magnetischen Platte 34 als Zwischenspeicher 50 festgelegt, der unmittelbar an das beim Auftreten der Warte-Information 55 aufgezeichnete Gesamt-Paket $51_n$ anschließt. In dem Zwischenspeicher 50 sind k Gesamt-Pakete 51 speicherbar. Durch Festlegen der Anzahl k der in dem Zwischenspeicher 50 speicherbaren Gesamt-Pakete 51 ist die maximale Aufzeichnungsdauer in dem Zwischenspeicher 50 festlegbar und an die Wünsche des Benutzers der Videoschnittgerätes anpaßbar.

Wenn der Benutzer des Gerätes 1 innerhalb der maximalen Aufzeichnungsdauer in dem Zwischenspeicher 50 nach Betätigen der Cut-Out-Taste 41 die Cut-In-Taste 40 betätigt, da der eben von dem Magnetband-Videorecorderteil 3 wiedergegebene Abschnitt des Videofilms von dem Benutzer erwünscht ist, dann werden die Gesamt-Pakete 51 in der in der Figur 2 dargestellten Weise aufgezeichnet. Hierbei sind die Gesamt-Pakete 51 so auf der magnetischen Platte 34 aufgezeichnet, als wenn die Kontinuierlich-Aufzeichnungs-Betriebsart nicht unterbrochen worden wäre. Vorteilhafterweise sind in diesem Fall die Informations-Signalpakete IP auf der magnetischen Platte 34 entsprechend der für eine Wiedergabe erforderliche und durch die Vorgängeradreßpakete IV und Nachfolgeadreßpakete IN angegebenen Reihenfolge aufgezeichnet. Folglich ist eine im Fachgebiet der Computertechnik bekannte Defragmentierung von Informations-Signalpaketen IP nicht notwendig, weshalb bei einem Wiedergeben besonders schnell auf die Informations-Signalpakete IP zugegriffen werden kann, wodurch sehr gute Wiedergabeeigenschaften der Einrichtung 2 in dem Gerät 1 gewährleistet sind.

Wenn in der Warte-Aufzeichnungs-Betriebsart für eine Aufzeichnungsdauer, die länger als die maximale Aufzeichnungsdauer in dem Zwischenspeicher 50 ist, keine Aktivierungs-Information AI durch Betätigen der Cut-In-Taste 40 erzeugt wird, dann ist mit den weiteren Betriebsmitteln 46 ein aufeinanderfolgend überschreibendes Speichern eines Aufzeichnungs-Informationssignales W in dem Zwischenspeicher 50 durchführbar. Hierbei wird nach dem Aufzeichnen des Informations-Signalpaketes $IP_{n+k}$ die Aufzeichnung in dem Gesamt-Paket $51_{n+1}$ fortgesetzt, wobei das Informations-Signalpaket $IP_{n+1}$ und anschließend weitere Informations-Signalpakete IP durch neue aufzuzeichnende Informations-Signalpakete IP des Aufzeichnungs-Informationssignales W überschrieben werden. Hierbei werden allerdings nur die Informations-Signalpakete IP, jedoch nicht die Adreß-Signalpakete in dem Zwischenspeicher 50 überschrieben, so daß die Reihung der Gesamt-Pakete 51 durch die in den Adreßsignalabschnitten 35 und 36 aufgezeichneten Adreß-Signalpakete bis zum Auftreten einer ersten Aktivierungs-Information 56 erhalten bleibt.

Wenn in der Warte-Aufzeichnungs-Betriebsart während eines Aufzeichnens in dem Informations-Signalpaket $IP_{n+2}$ die erste Aktivierungs-Information 56 auftritt, dann wird in das Nachfolgeradreßpaket $IN_{n+2}$ eine Reihungs-Adreßinformation IR gespeichert, die eine Position auf der magnetischen Platte 34 angibt, die symbolisch mit einer ersten Nachfolger-Pointerverbindung 58 gekennzeichnet ist und ab welcher Position ein nach dem Auftreten der Aktivierungs-Information 56 aufzuzeichnendes Aufzeichnungs-Informationssignal W in dem Informations-Signalpaket $IP_{n+k+1}$ aufzeichenbar ist. Weiters wird beim Auftreten der Aktivierungs-Information 56 in dem Vorgängeradreßsignalpaket $IV_{n+k+1}$ eine weitere Reihungs-Adreßinformation IR gespeichert, die eine Position auf der magnetischen Platte 34 angibt, die symbolisch mit einer ersten Vorgänger-Pointerverbindung 57 gekennzeichnet ist und ab der das zuletzt in dem Zwischenspeicher 50 aufgezeichnete Gesamt-Paket $51_2$ aufgezeichnet ist. Hierbei sind die weiteren Betriebsmittel 46 zum Überschreiben einer in einem Adreßsignalpaket gespeicherten Adreßinformation durch eine Reihungs-Adreßinformation IR ausgebildet. Durch die angegebene Festlegung der Reihung der in dem Zwischenspeicher 50 enthaltenen Gesamt-Pakete 51 ist erreicht, daß bei einem Wiedergeben folgende Reihung von Informations-Signalpaketen IP erfolgt: $IP_{n-1} \rightarrow IP_n \rightarrow IP_{n+1} \rightarrow IP_{n+2} \rightarrow IP_{n+k+1}$.

Somit ist erreicht, daß bei einem Wiedergeben in Abhängigkeit von dem Auftreten der Aktivierungs-Information 56 das als erstes in der magnetischen Platte 34 der Harddisk-Einrichtung 9 aufgezeichnete Informations-Signalpaket $IP_{n+k+1}$ hinter das in dem als Zwischenspeicher 50 gewählten Bereich der magnetischen Platte 34 als letztes aufgezeichnete Informations-Signalpaket $IP_{n+2}$ gereiht ist. Hierdurch wird auf besondere einfache Weise nur ein Teil der in dem Zwischenspeicher 50 gespeicherten Informations-Signalpakete IP, in diesem Fall der erste Einbindungs-Teil 54, in vor dem Auftreten der Warte-Information 55 und nach dem Auftreten der Aktivierungs-Information 56 in der magnetischen Platte 34 aufgezeichnete Informations-Signalpakete IP eingereiht. Die Dauer des Wiedergebens der in dem ersten Einbindungs-Teil 54 gespeicherten Informations-Signalpakete $IP_{n+1}$ und $IP_{n+2}$ gibt hierbei die Vorspanndauer an. Die Vorspanndauer kann auch nachträglich verändert werden, worauf nachfolgend noch näher eingegangen wird.

Wenn der Benutzer des Gerätes 1 nach dem Beenden des Schneidens des Videofilmes in einer mittels der weiteren Wiedergabetaste 43 aktivierten Wiedergabe-Betriebsart von der Harddisk-Einrichtung 9 der Einrichtung 2 wiedergegebene Informationssignale mit Hilfe eines an dem Ausgang 32 des Gerätes 1 angeschlossenen Fernsehgerätes betrachtet, dann kann er feststellen, daß die Vorspanndauer, die durch die Größe des ersten Einbindungs-Teiles 54 gegeben ist, zu kurz gewählt ist. Durch Betätigen der Positions-Taste 44 ist in der Einrichtung 2 eine Positionierungs-Betriebsart aktivierbar, in der sämtliche, auch nicht durch Reihungs-Adreßinformationen IR eingereihte Informations-Signalpakete IP, die in dem Zwischenspeicher 50 gespeichert sind, wiedergebbar sind. Wenn in der Positionierungs-Betriebsart - während des Wiedergebens von in dem Informations-Signalpaket $IP_{n+3}$ gespeicherten Informationssignalen - von dem Benutzer des Gerätes 1 die Reihungs-Taste 45 betätigt wird, dann werden die Vorgängeradreßpakete IV und Nachfolgeradreßpakete IN mit derartigen Reihungs-Adreßinformationen IR überschrieben, daß bei einem Wiedergeben folgende Reihung von Informations-Signalpaketen IP erfolgt: $IP_{n-1} \rightarrow IP_n \rightarrow IP_{n+1} \rightarrow IP_{n+2} \rightarrow IP_{n+3} \rightarrow IP_{n+k+1}$. Auf diese Weise kann die Vorspanndauer auch nach dem Schneiden des Videofilmes verändert werden, wobei die Vorspanndauer höchstens gleich der maximalen Aufzeichnungsdauer in dem Zwischenspeicher 50 festgelegt werden kann.

Die Figur 4 zeigt schematisch einen weiteren Bereich der magnetischen Platte 34 der Harddisk-Einrichtung 9 der Einrichtung 2, der einen Zwischenspeicher 50 bildet und bei dem in einem aus zwei Abschnitten bestehenden zweiten Einbindungs-Teil 59 gespeicherte Informations-Signalpakete IP durch mehrere Reihungs-Adreßinformationen IR in - in anderen Bereichen der magnetischen Platte 34 aufgezeichnete - Informations-Signalpakete IP eingereiht sind. Wenn bei der Einrichtung 2 auf in der Figur 1 nicht näher dargestellte Weise eine Vorspanndauer T1 eingestellt ist, die der Dauer des Wiedergebens von vier Informations-Signalpaketen IP entspricht, dann kann sich in Abhängigkeit von dem Auftreten einer zweiten Warte-Information 60 und einer zweiten Aktivierungs-Information 61 die in der Figur 4 dargestellte Reihung von Informations-Signalpaketen IP ergeben.

Wenn nach dem Auftreten der Warte-Information 60 zum ersten Mal in das k-te in dem Zwischenspeicher 50 enthaltene Gesamt-Paket $51_{n+k}$ aufgezeichnet wurde, dann wird in dem Nachfolgeadreßpaket $IN_{n+k}$ eine Reihungs-Adreßinformation IR gespeichert, die eine durch eine zweite Nachfolger-Pointerverbindung 63 gekennzeichnete Position auf der magnetischen Platte 34 angibt. In dem Vorgängeradreßpaket $IV_{n+1}$ wird eine Reihungs-Adreßinformation IR gespeichert, die eine durch eine zweite Vorgänger-Pointerverbindung 62 gekennzeichnete Position auf der magnetischen Platte 34 angibt. Mit der zweiten Vorgänger-Pointerverbindung 62 und der zweiten Nachfolger-Pointerverbindung 63 ist bei einem Wiedergeben eine Reihung des Informations-Signalpaketes $IP_{n+k}$ vor dem Informations-Signalpaket $IP_{n+1}$ erreicht.

Beim Auftreten der zweiten Aktivierungs-Information 61 werden ebenso wie beim Auftreten der in der Figur 3 angegebenen ersten Aktivierungs-Information 56 Reihungs-Adreßinformationen IR gespeichert, die eine Vorgänger-Pointerverbindung 57 und eine Nachfolger-Pointerverbindung 58 festlegen. Durch die Vorgänger-Pointerverbindung 57 und die Nachfolger-Pointerverbindung 58 wird bei einem Wiedergeben das beim Auftreten der Aktivierungs-Information 61 als erstes in die magnetische Platte 34 gespeicherte Informations-Signalpaket $IP_{n+k+1}$ hinter das in dem als Zwischenspeicher 50 gewählten Bereich der magnetischen Platte 34 als letztes aufgezeichnete Informations-Signalpakete $IP_{n+2}$ gereiht.

Weiters wird beim Auftreten der Aktivierungs-Information 61 in dem vor dem Auftreten der Warte-Information 60 zuletzt aufgezeichneten Nachfolgeradreßpaket $IN_n$ eine Reihungs-Adreßinformation IR gespeichert, die eine durch eine dritte Nachfolger-Pointerverbindung 65 gekennzeichnete Position auf der magnetischen Platte 34 angibt. In dem Vorgängeradreßpaket $IV_{n+k-1}$ wird eine entsprechende Reihungs-Adreßinformation IR gespeichert, die eine durch eine dritte Vorgänger-Pointerverbindung 64 gekennzeichnete Position in der magnetischen Platte 34 angibt. Mit den weiteren Betriebsmitteln 46 ist hierbei ein Erzeugen und Aufzeichnen der Reihungs-Adreßinformationen IR durchführbar, mit denen das in dem Zwischenspeicher 50 aufgezeichnete Informations-Signalpaket $IP_{n+k-1}$, das in einem bestimmten Abstand, der durch die Vorspanndauer T1 festgelegt ist, vor dem beim Beenden des aufeinanderfolgend überschreibenden Speichers in dem Zwischenspeicher 50 als letztes aufgezeichnetes Informations-Signalpaket $IP_{n+2}$ gereiht ist und bei einem Wiedergeben hinter das in dem auf der magnetischen Platte 34 unmittelbar vor dem Auftreten der Warte-Information 60 aufgezeichnete Informations-Signalpaket $IP_n$ gereiht ist.

Auf diese Weise ist erreicht, daß bei einem Wiedergeben die in dem zweiten Einbindungs-Teil 59 aufgezeichneten Informations-Signalpakete IP in die vor dem Auftreten der Warte-Information 60 und nach dem Auftreten der Aktivierungs-Information 61 in der magnetischen Platte 34 aufgezeichneten Informations-Signalpakete IP eingereiht werden. Bei einem Wiedergeben von Informations-Signalpaketen IP des in der Figur 4 dargestellten Bereiches der magnetischen Platte 34 ergibt sich daher folgende Reihung der Informations-Signalpakete IP:

$$IP_{n-1} \rightarrow IP_n \rightarrow IP_{n+k-1} \rightarrow IP_{n+k} \rightarrow IP_{n+1} \rightarrow IP_{n+2} \rightarrow IP_{n+k+1}.$$

Folglich ist vorteilhafterweise erreicht, daß ein Informationssignalabschnitt mit einer bestimmten Vorspanndauer T1 entsprechend dem zweiten Einbindungs-Teil 59, der vor dem Betätigen der Cut-In-Taste 40 durch den Benutzer des Gerätes 1 wiedergegeben wurde, nicht verloren geht.

Es kann erwähnt werden, daß der Aufzeichnungsträger auch durch mehrere eigenständige Aufzeichnungsträger, beispielsweise durch zwei Harddisk-Einrichtungen, gebildet sein kann, die von den weiteren Betriebsmitteln 46 als ein logischer Aufzeichnungsträger ansteuerbar sind. Hierdurch kann sich eine Kosteneinsparung ergeben, da mehrere Aufzeichnungsträger mit einer relativ geringen Aufzeichnungskapazität billiger sind als ein Aufzeichnungsträger mit einer hohen Aufnahmekapazität.

Die Figur 5 zeigt schematischen einen Bereich der magnetischen Platte 34 der Harddisk-Einrichtung 9 der Einrichtung 2, der einen Zwischenspeicher 50 bildet und bei dem alle in dem Zwischenspeicher 50 gespeicherten Informations-Signalpakete IP durch mehrere Reihungs-Adreßinformationen IR in - in anderen Bereichen der magnetischen Platte 34 aufgezeichnete - Informations-Signalpakete IP eingereiht sind. Wenn in der Einrichtung 2 auf in der Figur 1 nicht näher dargestellte Weise die Vorspanndauer gleich der maximalen Aufzeichnungsdauer in dem Zwischenspeicher 50 festgelegt ist, dann wird ein dritter Einbindungs-Teil 66, der alle in dem Zwischenspeicher 50 gespeicherten Informations-Signalpakete IP umfaßt, bei einem Wiedergeben zwischen vor dem Auftreten einer dritten Warte-Information 67 und nach dem Auftreten einer dritten Aktivierungs-Information 68 aufgezeichneten Informations-Signalpaketen IP eingereiht. Hierbei werden Reihungs-Adreßinformationen IR für die erste Vorgänger-Pointerverbindung 57, die erste Nachfolger-Pointerverbindung 58, die zweite Vorgänger-Pointerverbindung 62 und die zweite Nachfolger-Pointerverbindung 63 auf analoge Weise festgelegt, wie dies bereits anhand der in der Figur 4 dargestellten Reihung von Informations-Signalpaketen IP beschrieben wurde. Hingegen werden Reihungs-Adreßinformationen IR in dem Vorgängeradreßpaket $IV_{n+3}$ und in dem Nachfolgeradreßpaket $IN_n$ und damit die dritte Vorgänger-Pointerverbindung 64 und die dritte Nachfolger-Pointerverbindung 65 derart festgelegt, daß bei einem Wiedergeben das in dem beim Beenden des aufeinanderfolgend überschreibenden Speichems in dem Zwischenspeicher 50 als nächstes zu überschreibende Informations-Signalpaket $IP_{n+3}$ hinter das in der magnetischen Platte 34 unmittelbar vor dem Auftreten der Warte-Information 67 aufgezeichnete Informations-Signalpaket $IP_n$ gereiht ist. Bei einem Wiedergeben von Informations-Signalpaketen IP des in der Figur 5 dargestellten Bereichs der magnetischen Platte 34 ergibt sich daher folgende Reihung der Informations-Signalpakete IP:

$$IP_{n-1} \rightarrow IP_n \rightarrow IP_{n+3} \rightarrow ..... \rightarrow IP_{n+k-2} \rightarrow IP_{n+k-1} \rightarrow IP_{n+k} \rightarrow IP_{n+1} \rightarrow IP_{n+2} \rightarrow IP_{n+k+1}.$$

Auf diese Weise ist erreicht, daß als Vorspanndauer die maximale Aufzeichnungsdauer in dem Zwischenspeicher 50 ausgenützt ist. Somit werden bei einem Wiedergeben alle auf dem Aufzeichnungsträger aufgezeichneten Aufzeichnungs-Informationssignale W wiedergegeben und wird die Aufzeichnungskapazität der Harddisk-Einrichtung 9 besonders vorteilhaft ausgenutzt.

Bei der Einrichtung 2 gemäß dem ersten Ausführungsbeispiel der Erfindung ist als Aufzeichnungsträger vorteilhafterweise die magnetische Platte 34 der Harddisk-Einrichtung 9 gewählt, die einen Speicher mit wahlfreiem Zugriff bildet und einen wahlfreien Zugriff auf in dem Speicher gespeicherte Informations-Signalpakete IP gewährleistet. Weiters ist bei einem derartigen Speicher mit wahlfreiem Zugriff das Speichern und Wiedergeben von in einem Zwischenspeicher und in anderen Bereichen des Aufzeichnungsträgers aufgezeichneten Informations-Signalpaketen IP besonders gut möglich. Durch die Verwendung einer Harddisk-Einrichtung 9 sind besonders kurze Zugriffszeiten ermöglicht und eine ausreichend rasche Wiedergabe von Informations-Signalpaketen, die mit einer sehr hohen Datenrate wiedergegeben werden müssen, gewährleistet.

Es sei erwähnt, daß ein als Zwischenspeicher 50 festlegbarer Bereich des Aufzeichnungsträgers auch aus mehreren Bereichen eines oder auch mehrere Aufzeichnungsträger gebildet sein kann, die durch Verkettung mittels in Adreß-Signalpaketen 35 und 36 enthaltenen Adreßinformationen AD als ein logischer Bereich gereiht sind. Diese Adreßinformationen AD können auch eine Information über den Aufzeichnungsträger enthalten.

Es sei erwähnt, daß das Beginnen eines Schneidens eines Videofilmes auch durch Betätigen der Cut-Out-Taste 41 ausgelöst werden kann, wobei dann sofort am Beginn des Schneidens ein Bereich der magnetischen Platte 34 als Zwischenspeicher 50 festgelegt wird, in dem ein aufeinanderfolgend überschreibendes Speichern durchgeführt wird.

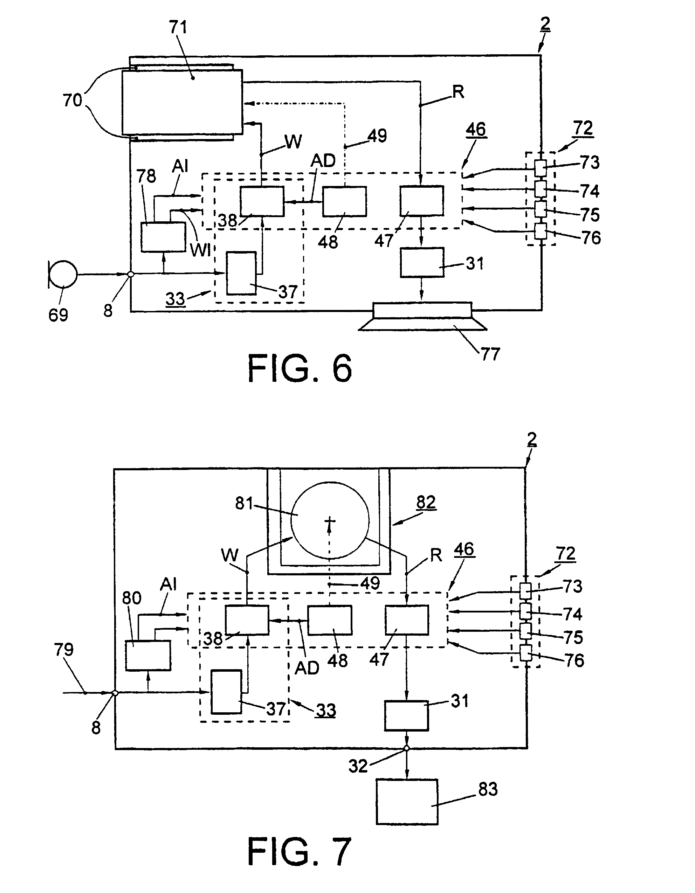

Die Figur 6 zeigt schematisch eine Einrichtung 2 gemäß einem zweiten Ausführungsbeispiel der Erfindung, die zum Aufzeichnen von Sprachsignalen als Diktiereinrichtung ausgebildet ist und die von aufzuzeichnenden Sprachsignalen aktivierbar ausgebildet ist. An einen Informationssignal-Eingang 8 der Einrichtung 2 ist ein Mikrofon 69 anschließbar, von dem ein Sprachsignal an die Einrichtung 2 abgebbar ist. Von dem Informationssignal-Eingang 8 sind Sprachsignale an Verarbeitungsmittel 33 abgebbar, die zum Abgeben eines Aufzeichnungs-Informationssignales W ausgebildet sind.

In der Einrichtung 2 gemäß der Figur 6 sind Aufnahmemittel 70 vorgesehen, die zum Aufnehmen eines Aufzeichnungsträgers ausgebildet sind und aus denen ein aufgenommener Aufzeichnungsträger wieder entnehmbar ist. Dadurch ist erreicht, daß in der Einrichtung 2 eine Vielzahl von Aufzeichnungsträgern jeweils einzeln aufeinanderfolgend verarbeitet werden können. Der Aufzeichnungsträger ist hierbei durch einen in einem Schutzträger aufgenommenen Halbleiterspeicher 71 gebildet, der als sogenannte PCMCIA-Karte (Laptop-Karte) bekannt ist.

Die Einrichtung 2 weist Eingabemittel 72 auf, in denen eine Aufnahme-Taste 73, eine Stop-Taste 74, eine Positions-Taste 75 und eine Wiedergabe-Taste 76 enthalten sind. Durch Betätigen der Aufnahme-Taste 73 ist eine Warte-Aufzeichnungs-Betriebsart aktivierbar. In der Einrichtung 2 ist eine weitere Aufzeichnungs-Betriebsart, nämlich eine Kontinuierlich-Aufzeichnungs-Betriebsart aktivierbar, worauf nachfolgend noch näher eingegangen wird. Bei aktivierter Aufzeichnungs-Betriebsart ist ein von den Verarbeitungsmitteln 33 abgegebenes Aufzeichnungs-Informationssignal W in dem Halbleiterspeicher 71 speicherbar, wobei mit Steuermitteln 48 der Betriebsmittel 46 über eine Wirkverbindung 49 ein Festlegen der jeweiligen Speicheradresse erfolgt. Durch Betätigen der Wiedergabe-Taste 76 ist eine Wiedergabe-Betriebsart aktivierbar. Bei aktivierter Wiedergabe-Betriebsart ist durch Betätigen der Positions-Taste 75 die Speicheradresse in dem Halbleiterspeicher 71 festlegbar, ab der ein Wiedergabe-Informationssignal R von dem Halbleiterspeicher 71 wiedergegeben wird. Ein Wiedergabe-Informationssignal R ist in Wiedergabe-Verarbeitungsmitteln 47 der Betriebsmittel 46 verarbeitbar und an die Ausgangssignalverarbeitungsmittel 31 abgebbar. Ein in den Ausgangssignalverarbeitungsmitteln 31 verarbeitetes Wiedergabe-Informationssignal R ist als Sprachsignal an einen an die Ausgangssignalverarbeitungsmittel 31 angeschlossenen Lautsprecher 77 der Einrichtung 2 abgebbar. Durch Betätigen der Stop-Taste 74 sind sowohl die Aufzeichnungs-Betriebsarten als auch die Wiedergabe-Betriebsart deaktivierbar.

In der Einrichtung 2 ist nunmehr ein Schwellwertdetektor 78 vorgesehen, der an den Informationssignal-Eingang 8 angeschlossen ist und dem ein Sprachsignal von dem Mikrofon 69 her zuführbar ist. Der Schwellwertdetektor 78 ist dazu ausgebildet, ein ihm zugeführtes Sprachsignal amplitudenmäßig mit einem vorgegebenen Schwellwert zu Vergleichen und durch diesen Vergleich eine Information über die Lautstärke eines von dem Mikrofon 69 empfangenen Sprachsignales oder nur eines Geräuschsignales zu erhalten. Wenn der Vergleich in dem Schwellwertdetektor 78 ergibt, daß die Amplitude eines dem Schwellwertdetektor 78 zugeführten Sprachsignales höher als der Schwellwert ist, dann ist der Schwellwertdetektor 78 zum Abgeben einer Aktivierungs-Information AI ausgebildet. Wenn der Vergleich in dem Schwellwertdetektor 78 ergibt, daß die Amplitude eines dem Schwellwertdetektor 78 zugeführten Sprachsignales oder nur eines Geräuschsignales niedriger als der Schwellwert ist, dann ist der Schwellwertdetektor 78 zum Abgeben einer Warte-Information WI ausgebildet. Sowohl die Aktivierungs-Information AI, als auch die Warte-Information WI sind von dem Schwellwertdetektor 78 den Betriebsmitteln 46 zuführbar.

Wenn in der Einrichtung 2 durch Betätigen der Aufnahme-Taste 73 die Warte-Aufzeichnungs-Betriebsart aktiviert wurde, dann sorgen die Betriebsmittel 46 nach entsprechender Ansteuerung durch den Schwellwertdetektor 78 für ein aufeinanderfolgend überschreibendes Speichern eines Aufzeichnungs-Informationssignales W in einem als Zwischenspeicher 50 wählbaren Bereich des Halbleiterspeichers 71, und zwar auf analoge Weise, wie dies in der Figur 5 dargestellt ist und anhand der Figur 5 beschrieben wurde. Der Zwischenspeicher 50 kann hierbei beispielsweise eine maximale Aufzeichnungsdauer von zwei (2) Sekunden aufweisen.

Wenn in der Einrichtung 2 die Warte-Aufzeichnungs-Betriebsart aktiviert ist und der Benutzer der als Diktiereinrichtung ausgebildeten Einrichtung 2 in das Mikrofon 69 zu sprechen beginnt, dann wird von dem Schwellwertdetektor 78 ein Sprachsignal mit ausreichend hoher Amplitude erkannt und eine Aktivierungs-Information AI an die Betriebsmittel 46 abgegeben. Beim Auftreten einer Aktivierungs-Information AI wird in der Einrichtung 2 die Kontinuierlich-Aufzeichnungs-Betriebsart aktiviert, in der die Betriebsmittel 46 für ein kontinuierliches Speichern eines Aufzeichnungs-Informationssignales W in dem Halbleiterspeicher 71 sorgen, wie dies bereits anhand der Figur 5 für den analogen Fall beschrieben wurde.

Der Detektionsvorgang in dem Schwellwertdetektor 78 und die Verarbeitungszeiten von dem Auftreten einer Aktivierungs-Information AI bis zum tatsächlichen Aufzeichnen eines Aufzeichnungs-Informationssignales W in dem Halbleiterspeicher 71 ergeben ein verzögertes Aktivieren der sprachgesteuerten Kontinuierlich-Aufzeichnungs-Betriebsart. Dieses verzögerte Aktivieren der sprachgesteuerten Kontinuierlich-Aufzeichnungs-Betriebsart kann beispielsweise 1 bis 2 Sekunden betragen. Vorteilhafterweise wird das in dem Zwischenspeicher 50 aufgezeichnete Aufzeichnungs-Informationssignal W in - in weiteren Bereichen des Halbleiterspeichers aufgezeichnete - Aufzeichnungs-Informationssignale W eingereiht, wie dies bereits anhand der Figur 5 für den analogen Fall beschrieben wurde. Hierdurch wird auch bei einer sprachgesteuerten Aktivierung der Aufzeichnungs-Betriebsart ein Verlust eines Sprachsignalabschnittes am Beginn des Aufzeichnens verhindert.

Die Figur 7 zeigt schematisch eine Einrichtung 2 gemäß einem dritten Ausführungsbeispiel der Erfindung, die als Datenspeichereinrichtung, beispielsweise in einem Personalcomputer, zum Aufzeichnen von von einer Signalquelle angebotenen Digitaldaten ausgebildet ist. Die Einrichtung 2 ist mit einem Informationssignal-Eingang 8 mit einer Datenleitung 79 eines Datennetzes verbunden, die hierbei eine Signalquelle bildet. Das Datennetz kann beispielsweise durch ein Telefonnetz, ein Fernsehkabelnetz oder das Internet gebildet sein. Die von dem Datennetz abgegebenen Digitaldaten können hierbei durch Text-Daten, Grafik-Daten, Akustik-Daten oder durch weitere Informations-Daten gebildet sein. Dem Informationssignal-Eingang 8 zugeführte Digitaldaten sind einerseits Verarbeitungsmitteln 33, die zum Abgeben eines Aufzeichnungs-Informationssignales W ausgebildet sind, und andererseits einem Kennsignaldetektor 80 zuführbar. Durch Betätigen einer Aufnahme-Taste 73 ist eine Warte-Aufzeichnungs-Betriebsart aktivierbar. In der Einrichtung 2 ist eine weitere Aufzeichnungs-Betriebsart, nämlich eine Kontinuierlich-Aufzeichnungs-Betriebsart aktivierbar, worauf nachfolgend noch näher eingegangen wird. Ein von den Verarbeitungsmitteln 33 abgebbares Aufzeichnungs-Informationssignal W ist in der Aufzeichnungs-Betriebsart in einer Magneto-Optischen-Disk 81 speicherbar, die hierbei einen Aufzeichnungträger bildet und die in ein MO-Laufwerk 82 aufnehmbar ist, das hierbei Aufnahmemittel für die Disk 81 bildet.

Ein in der Wiedergabe-Betriebsart von der Magneto-Optischen-Disk 81 wiedergegebenes Wiedergabe-Informationssignal R ist über Wiedergabe-Verarbeitungsmittel 47 der Betriebsmittel 46 Ausgangssignalverarbeitungsmitteln 31 zuführbar. In den Ausgangssignalverarbeitungsmitteln 31 verarbeitete Wiedergabe-Informationssignale R sind an den Ausgang 32 der Einrichtung 2 als Digitaldaten abgebbar. An den Ausgang 32 ist ein Monitor 83 anschließbar, der einen Lautsprecher enthält. Mit dem Monitor 83 sind die Digitaldaten in jeweils entsprechender Form optisch anzeigbar oder gegebenenfalls mit seinem Lautsprecher akustisch wiedergebbar.

In der Einrichtung 2 ist nunmehr der Kennsignaldetektor 80 dazu ausgebildet, ein Start-Kennsignal und ein Stop-Kennsignal zu detektieren. Wenn der Kennsignaldetektor 80 ein Start-Kennsignal detektiert, dann ist der Kennsignaldetektor 80 zum Abgeben einer Aktivierungs-Information AI ausgebildet. Wenn der Kennsignaldetektor 80 ein Stop-Kennsignal detektiert, dann ist der Kennsignaldetektor 80 zum Abgeben einer Warte-Information WI ausgebildet. Sowohl die Aktivierungs-Information AI als auch die Warte-Information WI sind von dem Kennsignaldetektor 80 den Betriebsmitteln 46 zuführbar. Sowohl das Start-Kennsignal als auch Stop-Kennsignal ist vom Benutzer der Einrichtung 2 in einer in der Figur 7 nicht näher dargestellten Weise für den jeweiligen Anwendungsfall und an die erwarteten Digitaldaten anpaßbar.

Die Digitaldaten können in einem Anwendungsfall durch Text-Daten gebildet sein, in denen Nachrichten für eine Vielzahl von Benutzern einer Einrichtung 2 enthalten sind. Hierbei kann ein Start-Kennsignal durch ein für einen Benutzer einer Einrichtung 2 kennzeichnendes Kennsignal, welches beispielsweise seinen Namen enthalten kann, gebildet sein. Bei diesem Anwendungsfall ist in dem Kennsignaldetektor 80 jeder Einrichtung 2 ein anderes Soll-Start-Kennsignal festgelegt. Ein Soll-Stop-Kennsignal kann für alle Einrichtungen 2 einheitlich festgelegt sein. In dem Datennetz versandte Digitaldaten werden von allen Einrichtungen 2, die mit dem Datennetz verbunden sind, empfangen. Wenn von dem Benutzer der Einrichtung 2 Digitaldaten von dem Datennetz mit für den Benutzer bestimmten Nachrichten erwartet werden, dann ist durch Betätigen der Aufnahme-Taste 73 die Warte-Aufnahme-Betriebsart aktivierbar. In der Warte-Aufzeichnungs-Betriebsart ist ein Aufzeichnungs-Informationssignal W entsprechend der in der Figur 5 dargestellten Weise in einem Zwischenspeicher 50 aufeinanderfolgend überschreibend speicherbar.

Wenn der Kennsignaldetektor 80 in den empfangenen Digitaldaten das bestimmte Start-Kennsignal detektiert, dann gibt der Kennsignaldetektor 80 eine Aktivierungs-Information AI an die Betriebsmittel 46 ab, wodurch die Kontinuierlich-Aufzeichnungs-Betriebsart aktiviert ist. In der Kontinuierlich-Aufzeichnungs-Betriebsart ist ein Aufzeichnungs-Informationssignal W entsprechend der anhand der Figur 5 beschriebenen Weise in der Magneto-Optischen-Disk 81 speicherbar. Die auf das bestimmte Start-Kennsignal folgenden Digitaldaten, die eine Nachricht für den Benutzer der Einrichtung 2 enthalten, werden in der Kontinuierlich-Aufzeichnungs-Betriebsart bis zur Detektion eines Stop-Kennsignales durch den Kennsignaldetektor 80 in der Magneto-Optischen-Disk 81 gespeichert. Vorteilhafterweise geht in der durch die Einrichtung 2 gebildeten Datenspeichereinrichtung beim Auftreten des bestimmten Start-Kennsignales in den Digitaldaten kein Abschnitt der Nachricht am Beginn des Aufzeichnens durch Verarbeitungszeiten in dem Kennsignaldetektor 80 und den Betriebsmitteln 46 verloren, da die in dem Zwischenspeicher 50 gespeicherten Aufzeichnungs-Informationssignale W in - in weiteren Bereichen der Magneto-Optischen-Disk 81 gespeicherte - Aufzeichnungs-Informationssignale W eingereiht werden. Hierdurch werden auf der Magneto-Optischen-Disk 81 der Einrichtung 2 Nachrichten, die für den Benutzer der Einrichtung 2 bestimmt sind, gesammelt, ohne daß am jeweiligen Nachrichtenbeginn ein Teil der Nachrichten verlorengeht. Diese Nachrichten können zu einem beliebigen späteren Zeitpunkt von dem Benutzer der Einrichtung 2 durch Betätigen der Wiedergabe-Taste 76 mit Hilfe des Monitors 83 wiedergegeben werden.

Es sei erwähnt, daß ein Start-Kennsignal auch durch eine bestimmte Abfolge von Digitaldaten, die von einem Grafik-Computerprogramm als eine bestimmte Grafik, ein bestimmtes Muster oder ein bestimmtes Logo dargestellt werden, gebildet sein kann. Ebenso kann ein Start-Kennsignal durch eine bestimmte Abfolge von Digitaldaten gebildet sein, die einem Wort eines digitalisierten Sprachsignals entspricht. Hierbei erfolgt dann bei Detektion dieser bestimmten Abfolge von Digitaldaten ein Aktivieren der Kontinuierlich-Aufzeichnungs-Betriebsart, wobei am Beginn des Aufzeichnens kein Informationssignalabschnitt verlorengeht.

Die Figur 8 zeigt schematisch eine Einrichtung 2 gemäß einem vierten Ausführungsbeispiel der Erfindung, die als Videorecorder zum Aufzeichnen von Videosignalen einer Überwachungskamera 84 während einer sehr langen Überwachungszeitdauer ausgebildet ist. Ein der Einrichtung 2 an dem Informationssignal-Eingang 8 zugeführtes Videosignal ist Verarbeitungsmitteln 33 zuführbar, in denen Eingangsverarbeitungsmittel 37 und Aufnahme-Verarbeitungsmittel 38 enthalten sind, welche Verarbeitungsmittel 33 zum Abgeben eines Aufzeichnungs-Informationssignales W ausgebildet sind. Die Einrichtung 2 weist Aufnahmemittel 70 auf, die zum Aufnehmen einer Magnetbandkassette 5 ausgebildet sind und aus denen eine zuvor aufgenommene Magnetbandkassette 5 auch wieder entnehmbar ist. In der Magnetbandkassette 5 ist ein Magnetband 85 vorgesehen, das hierbei einen Aufzeichnungsträger bildet. In dem Magnetband 85 sind in bekannter Weise Aufzeichnungs-Informationssignale W aufzeichenbar, wobei Steuermittel 48 über zwei Wirkverbindungen 29 und 30 die Magnetbandgeschwindigkeit regeln. In der Figur 9 sind Bereiche eines Magnetbandes 85 dargestellt, in denen ein Aufzeichnungs-Informationssignal W aufgezeichnet ist und die einen Zwischenspeicher 50 und einen weiteren Zwischenspeicher 86 bilden.

Durch Betätigen einer Aufnahme-Taste 73 ist eine Warte-Information 87 an die Betriebsmittel 46 abgebbar, wodurch in der Einrichtung 2 eine Warte-Aufzeichnungs-Betriebsart aktiviert ist. In der Warte-Aufzeichnungs-Betriebsart sind die Betriebsmittel 46 zum aufeinanderfolgend überschreibenden Aufzeichnen eines Aufzeichungs-Informationsignals in ein Informations-Signalpaket $IP_1$ in dem Zwischenspeicher 50 ausgebildet. Der Zwischenspeicher 50 kann hierbei beispielsweise eine maximale Aufzeichnungsdauer von 5 Minuten aufweisen.

Die Einrichtung 2 gemäß der Figur 8 weist einen Detektor-Eingang 88 auf, an den ein Bewegungsmelder 89 angeschlossen ist, der in unmittelbarer Umgebung der Überwachungskamera 84 angebracht ist und mit dem eine Bewegung in einem Umkreis von beispielsweise 5 m detektierbar ist und von dem beim Feststellen einer Bewegung ein Detektionsergebnis an den Detektor-Eingang 88 abgebbar ist. Der Detektor-Eingang 88 ist mit den Betriebsmitteln 46 verbunden, so daß den Betriebsmitteln 46 ein solches Detektionsergebnis als Aktivierungs-Information 90 zuführbar ist. Beim Auftreten einer Aktivierungs-Information 90 sind die Betriebsmittel 46 zum Aufzeichnen einer Adreßinformation AD in einem Nachfolgeradreßpaket $IN_1$ ausgebildet, welche Adreßinformation AD eine Position auf dem Magnetband 85 bezeichnet, ab der nach dem Auftreten der Aktivierungs-Information 90 ein Aufzeichnungs-Informationssignal W in einem Informations-Signalpaket $IP_2$ aufgezeichnet wird. Diese Position auf dem Magnetband 85, die durch die Adreßinformation AD in dem Nachfolgeradreßpaket $IN_1$ angegeben ist, ist symbolisch mit einer Nachfolger-Pointerverbindung 91 gekennzeichnet.

In der Einrichtung 2 ist weiters ein Zeitgeber 92 vorgesehen, der nach einer bestimmten Zeitdauer nach dem Auftreten der Aktivierungs-Information 90, beispielsweise nach 2 Minuten, eine weitere Warte-Information 93 an die Betriebsmittel 46 abgibt. Beim Auftreten der weiteren Warte-Information 93 erfolgt mit den Betriebsmitteln 46 ein Festlegen eines Bereiches des Magnetbandes 85 als weiterer Zwischenspeicher 86.

In der Warte-Aufzeichnungs-Betriebsart ist mit den Betriebsmitteln 46 - nach entsprechender Ansteuerung durch den Bewegungsmelder 89 - ein aufeinanderfolgend überschreibendes Aufzeichnen eines Aufzeichnungs-Informationssignales W in einem Informations-Signalpaket $IP_3$ bis zum Auftreten einer weiteren Aktivierungs-Information 94 durchführbar. Beim Auftreten der weiteren Aktivierungs-Information 94 ist mit den Betriebsmitteln 46 ein Aufzeichnen einer Adreßinformation AD in einem Nachfolgeradreßpaket $IN_3$ durchführbar, welche Adreßinformation AD eine Position auf dem Magnetband 85 kennzeichnet, ab der nach dem Auftreten der weiteren Aktivierungs-Information 94 das Aufzeichnungs-Informationssignal W in einem Informations-Signalpaket $IP_4$ aufgezeichnet wird. Diese Position, ab der das Aufzeichnungs-Informationssignal W in dem Informations-Signalpaket $IP_4$ aufgezeichnet ist, ist mit einer weiteren Nachfolger-Pointerverbindung 95 gekennzeichnet.

Auf diese Weise ist erreicht, daß ein von der Überwachungskamera 84 abgegebenes Videosignal vorerst in dem Zwischenspeicher 50 aufgezeichnet wird und wenn der Bewegungsmelder 89 eine Bewegung im Erfassungsbereich des Bewegungsmelders 89 detektiert, die Aufzeichnung in einem Informations-Signalpaket $IP_2$ fortgesetzt wird. Weiters ist erreicht, daß bei einem Wiedergeben ein Einbindungsteil 96, in dem für eine Vorspanndauer das Videosignal der Überwachungskamera 84 vor der Detektion einer Bewegung durch den Bewegungsmelder 89 aufgezeichnet ist, vor dem in dem Informations-Signalpaket $IP_2$ aufgezeichneten Aufzeichnungs-Informationssignal W wiedergebbar ist. Ebenso ist bei einem Wiedergeben ein weiterer Einbindungsteil 97 nach dem Wiedergeben des Informations-Signalpaketes $IP_2$ und vor dem Wiedergeben des Informations-Signalpaketes $IP_4$ wiedergebbar. Somit ist auf besonders einfache Weise erreicht, daß das Videosignal auch vor dem Auftreten einer Aktivierungs-Information 90 bzw. 94 auf dem Magnetband 85 aufgezeichnet ist und die Signalqualität nicht durch einen zusätzlichen Aufzeichnungs- und Wiedergabevorgang verschlechtert wird. Weiters ist ein kostengünstiger Videorecorder erhalten, bei dem durch das Ausnützen eines Bereiches des Aufzeichnungsträgers als Zwischenspeicher sich ein separater Zwischenspeicher erübrigt.

Durch Betätigen der Wiedergabe-Taste 76 ist die Wiedergabe-Betriebsart aktivierbar. Bei aktivierter Wiedergabe-Betriebsart ist mit einer Positions-Taste 75 eine Position auf dem Magnetband 85 festlegbar, ab der ein Wiedergabe-Informationssignal R wiedergebbar ist. Auf diese Weise sind auch jene Teile der Informations-Signalpakete $IP_1$ und $IP_3$ wiedergebbar, die in den beiden Zwischenspeichern 50 und 86 enthalten sind, jedoch nicht in den beiden Einbindungs-Teilen 96 und 97 enthalten sind. Folglich kann, wenn die Vorspanndauer, die durch die Wiedergabedauer eines Wiedergabe-Informationssignales R aus den beiden Einbindungs-Teilen 96 und 97 für eine genaue Untersuchung des Videosignales der Überwachungskamera 84 zu kurz ist, auf die gesamte Aufzeichnungsdauer in den beiden Zwischenspeichern 50 und 86 ausgedehnt werden. Wenn andererseits die Vorspanndauer der beiden Einbindungs-Teile 96 und 97 ausreicht, dann ist eine für den Benutzer der Einrichtung 2 komfortable Wiedergabemöglichkeit des Videosignales der Überwachungskamera 84 sowohl vor dem Auftreten eines Detektionsergebnisses des Bewegungsmelders 89 als auch nach dem Auftreten eines Detektionsergebnisses des Bewegungsmelders 89 möglich.

Es sei erwähnt, daß durch Vorsehen einer - wie bei dem Gerät 1 gemäß der Figur 1 vorgesehenen - Reihungs-Taste bei der Einrichtung 2 gemäß der Figur 8 die Vorspanndauer auch nachträglich verkürzt werden kann, in dem die in dem Nachfolgeadreßpaket $IN_1$ gespeicherte Adreßinformation AD an einer mit Hilfe der Positions-Taste 75 ausgewählten Position in dem Einbindungs-Teil 96 gespeichert wird.

## Patentansprüche

1. Einrichtung 2 zum Aufzeichnen eines von einer Signalquelle 69; 79; 84 angebotenen Informationssignales in einem Aufzeichnungsträger 34; 71; 81; 85 ohne Verlust eines Informationssignalabschnittes 10 am Beginn eines Aufzeichnens,
   enthaltend
   Verarbeitungsmittel 33 zum Verarbeiten eines Informationssignales und zum Abgeben eines Aufzeichnungs-Informationssignales W sowie
   Eingabemittel 39; 72 zum Abgeben einer Aktivierungs-Information AI und einer Warte-Information WI sowie
   mit zumindest einem Teil der Verarbeitungsmittel 33 und mit den Eingabemitteln 39; 73 zusammenwirkende Betriebsmittel 46,
   mit denen in Abhängigkeit von dem Auftreten einer Aktivierungs-Information AI ein Aufzeichnen eines Aufzeichnungs-Informationssignales W in dem Aufzeichnungsträger 34; 71; 81; 85
   bewerkstelligbar ist und
   mit denen weiters zumindest in Abhängigkeit von dem Auftreten einer Warte-Information WI ein aufeinanderfolgend überschreibendes Speichern eines Aufzeichnungs-Informationssignales W in einem Zwischenspeicher 50 bewerkstelligbar ist und
   **dadurch gekennzeichnet,**
   **daß** die Betriebsmittel 46 zum Erzeugen und Aufzeichnen eines Aufzeichnungs-Informationssignales W ausgebildet sind, das Informations-Signalpakete IP und Adreß-Signalpakete IV, IN enthält,
   wobei die Informations-Signalpakete IP den Informationssignalen entsprechen und
   wobei in den Adreß-Signalpaketen IV, IP Adreßinformationen AD enthalten sind, mit denen - bei einem Wiedergeben von in einem als Zwischenspeicher 50 gewählten Bereich des Aufzeichnungsträgers 34; 71; 81; 85 aufgezeichneten Informations-Signalpaketen IP und in weiteren Bereichen des Aufzeichnungsträgers 34; 71; 81; 85 aufgezeichneten Informations-Signalpaketen IP - die zeitliche Abfolge der wiedergegebenen Informations-Signalpakete IP zur Reihung derselben festlegbar ist.

2. Einrichtung 2 nach Anspruch 1, **dadurch gekennzeichnet, daß** die Betriebsmitteln 46 zum Erzeugen und Aufzeichnen mindestens einer Reihungs-Adreßinformation $IN_{n+2}$; $IV_{n+k+1}$; $IN_1$; $IN_3$ in Abhängigkeit von dem Auftreten einer auf eine Warte-Information 55; 60; 67; 87; 93 folgenden Aktivierungs-Information 56; 61; 68; 90; 93 ausgebildet sind, mit welcher mindestens einen Reihungs-Adreßinformation $IN_{n+2}$; $IV_{n+k+1}$; $IN_1$; $IN_3$ - bei einem Wiedergeben von in dem Aufzeichnungsträger 34; 71; 81; 85 aufgezeichneten Informations-Signalpaketen IP - sowohl aus einem als Zwischenspeicher 50 gewählten Bereich des Aufzeichnungsträgers wiedergegebene Informations-Signalpakete IP und weitere wiedergegebene Informations-Signalpakete IP in ihrer zeitlichen Abfolge reihbar sind als auch das in Abhängigkeit von dem Auftreten einer Aktivierungs-Information 56; 61; 68; 90; 93 als erstes in dem Aufzeichnungsträger 34; 71; 81; 85 aufgezeichnete Informations-Signalpaket $IP_{n+k+1}$; $IP_2$; $IP_4$ bei einem Wiedergeben hinter das in dem als Zwischenspeicher 50 gewählten Bereich des Aufzeichnungsträgers 34; 71; 81; 85 als letztes aufgezeichnete Informations-Signalpaket $IP_{n+2}$; $IP_1$; $IP_3$ reihbar ist (Fig.1 bis Fig 7).

3. Einrichtung 2 nach Anspruch 2, **dadurch gekennzeichnet, daß** die Betriebsmittel 46 zum Erzeugen und Aufzeichnen von mindestens einer Reihungs-Adreßinformation $IN_n$, $IV_{n+k-1}$; $IN_n$, $IV_{n+3}$ ausgebildet sind, mit der bei einem Wiedergeben ein in einem als Zwischenspeicher 50 gewählten Bereich des Aufzeichnungsträgers 34; 71; 81 aufgezeichnetes Informations-Signalpaket $IP_{n+k-1}$; $IP_{n+3}$ hinter das in dem Aufzeichnungsträger 34; 71; 81 unmittelbar vor dem Auftreten einer Warte-Information 60; 67 aufgezeichnete Informations-Signalpaket $IP_n$ reihbar ist (Fig. 1; Fig. 4 bis Fig. 7).

4. Einrichtung 2 nach Anspruch 3, **dadurch gekennzeichnet, daß** die Betriebsmittel 46 zum Erzeugen und Aufzeichnen von mindestens einer Reihungs-Adreßinformation $IN_n$, $IV_{n+3}$ ausgebildet sind, mit der bei einem Wiedergeben ein in einem als Zwischenspeicher 50 gewählten Bereich des Aufzeichnungsträgers 34; 71; 81 aufgezeichnetes Informations-Signalpaket $IP_{n+3}$, das bei einem Beenden des aufeinanderfolgend überschreibenden Speicherns in dem als Zwischenspeicher 50 gewählten Bereich des Aufzeichnungsträgers 34; 71; 81 als nächstes zu überschreibendes Informations-Signalpaket $IP_{n+3}$ gereiht ist, hinter das in dem Aufzeichnungsträger 34; 71; 81 unmittelbar vor dem Auftreten einer Warte-Information 67 aufgezeichnete Informations-Signalpaket $IP_n$ reihbar ist (Fig. 1; Fig. 5 bis Fig. 7).

5. Einrichtung nach Anspruch 3, **dadurch gekennzeichnet, daß** die Betriebsmittel 46 zum Erzeugen und Aufzeichnen von mindestens einer Reihungs-Adreßinformation $IN_n$, $IV_{n+k-1}$ ausgebildet sind, mit der bei einem Wiedergeben ein in einem als Zwischenspeicher 50 gewählten Bereich des Aufzeichnungsträgers 34; 71; 81 aufgezeichnetes Informations-Signalpaket $IP_{n+k-1}$, das in einem bestimmten Abstand vor dem beim Beenden des aufeinanderfolgend überschreibenden Speicherns in dem als Zwischenspeicher 50 gewählten Bereich des Aufzeichnungsträgers 34; 71; 81 als letztes aufgezeichneten Informations-Signalpaket $IP_{n+k-1}$ gereiht ist, hinter das in dem Aufzeichnungsträger 34; 71; 81 unmittelbar vor dem Auftreten einer Warte-Information 60 aufgezeichnete Informations-Signalpaket $IP_n$ reihbar ist Fig. 1; Fig. 4; Fig. 6; Fig. 7).

6. Einrichtung 2 nach Anspruch 2, **dadurch gekennzeichnet, daß** die Betriebsmittel 46 zum Überschreiben einer in dem Aufzeichnungsträger 34; 71; 81 aufgezeichneten Adreßinformation AD mit einer Reihungs-Adreßinformation $IN_n$, $IN_{n+2}$, $IN_{n+k}$, $IV_{n+1}$ $IV_{n+3}$, $IV_{n+k-1}$, $IV_{n+k+1}$ ausgebildet sind (Fig. 1 bis Fig. 7).

7. Einrichtung 2 nach Anspruch 1, **dadurch gekennzeichnet, daß** mit den Betriebsmitteln 46 als Zwischenspeicher 50 ein Bereich des Aufzeichnungsträgers 34; 71; 81; 85 wählbar ist, der unmittelbar an jenen Bereich des Aufzeichnungsträgers 34; 71; 81; 85 anschließt, in dem ein unmittelbar vor dem Auftreten einer Warte-Information WI aufgezeichnetes Informations-Signalpaket $IP_n$ aufgezeichnet ist (Fig. 1 bis Fig. 9).

8. Einrichtung 2 nach Anspruch 1, **dadurch gekennzeichnet, daß** die Betriebsmittel 46 zum Zusammenwirken mit einem Speicher mit einem wahlfreien oder einem quasi-wahlfreien Zugriff als Aufzeichnungsträger 34; 71; 81 ausgebildet sind (Fig. 1 bis Fig. 7).

9. Einrichtung 2 nach Anspruch 1, **dadurch gekennzeichnet, daß** die Einrichtung 12 einen eingebauten Aufzeichnungsträger 34; 81 enthält (Fig. 1; Fig. 7).

10. Einrichtung 2 nach Anspruch 1, **dadurch gekennzeichnet, daß** Aufnahmemittel 70 vorgesehen sind, in die ein Aufzeichnungsträger 71; 85 aufnehmbar ist und aus denen ein aufgenommener Aufzeichnungsträger 71; 85 wieder entnehmbar ist (Fig. 6; Fig. 8).

11. Einrichtung 2 nach Anspruch 10, **dadurch gekennzeichnet, daß** die Aufnahmemittel 70 zum Aufnehmen eines in einem Schutzträger aufgenommenen Halbleiterspeichers 71 als Aufzeichnungsträger ausgebildet sind (Fig. 6).

**12.** Einrichtung 2 nach Anspruch 10, **dadurch gekennzeichnet, daß** die Aufnahmemittel 70 zum Aufnehmen einer auf optische Weise abtastbaren Platte als Aufzeichnungsträger 81 ausgebildet sind (Fig. 7).

**13.** Einrichtung 2 nach Anspruch 10, **dadurch gekennzeichnet, daß** die Aufnahmemittel 70 zum Aufnehmen einer auf magnetische Weise abtastbaren Platte als Aufzeichnungsträger 34 ausgebildet sind.

**14.** Einrichtung 2 nach Anspruch 10, **dadurch gekennzeichnet, daß** die Aufnahmemittel 70 zum Aufnehmen einer Magnetbandkassette 5 ausgebildet sind, in der als Aufzeichnungsträger 85 ein Magnetband untergebracht ist (Fig. 8).

**15.** Einrichtung 2 nach Anspruch 1, **dadurch gekennzeichnet, daß** die Einrichtung 2 als Videorecorder zum Aufzeichnen von Bildsignalen und Tonsignalen ausgebildet ist (Fig. 1; Fig 8).

**16.** Einrichtung 2 nach Anspruch 1, **dadurch gekennzeichnet, daß** die Einrichtung 2 als Diktiereinrichtung, vorzugsweise als von aufzuzeichnenden Sprachsignalen aktivierbare sprachgesteuerte Diktiereinrichtung, zum Aufzeichnen von Sprachsignalen ausgebildet ist (Fig. 6).

**17.** Einrichtung 2 nach Anspruch 1, **dadurch gekennzeichnet, daß** die Einrichtung 2 als Datenspeichereinrichtung zum Aufzeichnen von von einer Signalquelle 79 angebotenen Digitaldaten ausgebildet ist (Fig. 7).

**18.** Verfahren zum Aufzeichnen eines Informationssignales in einem Aufzeichnungsträger 34; 71; 81; 85 ohne Verlust eines Informationssignalabschnittes 10 am Beginn eines Aufzeichnens,
wobei das Verfahren die nachfolgend angeführten Schritte enthält:

Verarbeiten eines Informationssignales und Abgeben eines Aufzeichnungs-Informationssignales W sowie
Erzeugen einer Aktivierungs-Information AI und einer Warte-Information WI sowie
Aufzeichnen eines Aufzeichnungs-Informationssignales W in Abhängigkeit von dem Auftreten einer Aktivierungs-Information AI sowie
aufeinanderfolgend überschreibendes Speichern eines Aufzeichnungs-Informationssignales W in einem Zwischenspeicher 50 zumindest in Abhängigkeit von dem Auftreten einer Warte-Information WI sowie

**dadurch gekennzeichnet,**
**daß** das Verfahren die nachfolgend angeführten weiteren Schritte enthält:

Erzeugen und Aufzeichnen eines Aufzeichnungs-Informationssignales W, das Informations-Signalpakete IP und Adreß-Signalpakete IV, IN enthält,

wobei die Informations-Signalpakete den Informationssignalen entsprechen und
wobei in den Adreß-Signalpaketen IV, IN Adreßinformationen AD enthalten sind, mit denen - bei einem Wiedergeben von in einem als Zwischenspeicher 50 gewählten Bereich des Aufzeichnungsträgers 34; 71; 81; 85 aufgezeichneten Informations-Signalpaketen IP und in weiteren Bereichen des Aufzeichnungsträgers 34; 71; 81; 85 aufgezeichneten Informations-Signalpaketen IP - die zeitliche Abfolge der wiedergegebenen Informations-Signalpakete IP zur Reihung derselben festlegbar ist.

**19.** Verfahren nach Anspruch 18, **dadurch gekennzeichnet, daß** ein Erzeugen und Aufzeichnen von mindestens einer Reihungs-Adreßinformation $IN_{n+2}$, $IV_{n+k+1}$; $IN_1$, $IN_3$ in Abhängigkeit von dem Auftreten einer auf eine Warte-Information 55; 60; 67; 87; 93 folgenden Aktivierungs-Information 56; 61; 68; 90; 93 durchgeführt wird, mit welcher mindestens einen Reihungs-Adreßinformation $IN_{n+2}$, $IV_{n+k+1}$; $IN_1$; $IN_3$ - bei einem Wiedergeben von in dem Aufzeichnungsträger 34; 71; 81; 85 aufgezeichneten Informations-Signalpaketen IP- sowohl aus einem als Zwischenspeicher 50 gewählten Bereich des Aufzeichnungsträgers 34; 71; 81; 85 wiedergegebene Informations-Signalpakete IP und weitere wiedergegebene Informations-Signalpakete IP in ihrer zeitlichen Abfolge reihbar sind als auch das in Abhängigkeit von dem Auftreten einer Aktivierungs-Information 56; 61; 68; 90; 93 als erstes in dem Aufzeichnungsträger 34; 71; 81; 85 aufgezeichnete Informations-Signalpaket $IP_{n+k+1}$; $IP_2$, $IP_4$ bei einem Wiedergeben hinter das in dem als Zwischenspeicher 50 gewählten Bereich des Aufzeichnungsträgers 34; 71; 81; 85 als letztes aufgezeichnete Informations-Signalpaket $IP_{n+2}$; $IP_1$, $IP_3$ reihbar ist (Fig. 1 bis Fig. 7).

**20.** Verfahren nach Anspruch 19, **dadurch gekennzeichnet, daß** ein Erzeugen und Aufzeichnen $IN_n$, $IV_{n+k-1}$; $IN_n$, $IV_{n+3}$ von mindestens einer Reihungs-Adreßinformation durchgeführt wird, mit der bei einem Wiedergeben ein in einem als Zwischenspeicher 50 gewählten Bereich des Aufzeichnungsträgers 34; 71; 81 aufgezeichnetes Informations-Signalpaket $IP_{n+k-1}$; $IP_{n+3}$ hinter das in dem Aufzeichnungsträger 34; 71; 81 unmittelbar vor dem Auftreten 67 einer Warte-Information aufgezeichnete Informations-Signalpaket $IP_n$ reihbar ist (Fig. 1; Fig. 4 bis Fig. 7).

21. Verfahren nach Anspruch 20, **dadurch gekennzeichnet, daß** ein Erzeugen und Aufzeichnen von mindestens einer Reihungs-Adreßinformation $IN_n$; $IV_{n+3}$ durchgeführt wird, mit der bei einem Wiedergeben ein in einem als Zwischenspeicher 50 gewählten Bereich des Aufzeichnungsträgers 34; 71; 81 aufgezeichnetes Informations-Signalpaket $IP_{n+3}$, das bei einem Beenden des aufeinanderfolgend überschreibenden Speicherns in dem als Zwischenspeicher 50 gewählten Bereich des Aufzeichnungsträgers 34; 71; 81 als nächstes zu überschreibendes Informations-Signalpaket $IP_{n+3}$ gereiht ist, hinter das in dem Aufzeichnungsträger 34; 71; 81 unmittelbar vor dem Auftreten einer Warte-Information 67 aufgezeichnete Informations-Signalpaket $IP_n$ reihbar ist (Fig. 1, Fig. 5 bis Fig. 7).

22. Verfahren nach Anspruch 20, **dadurch gekennzeichnet, daß** ein Erzeugen und Aufzeichnen von mindestens einer Reihungs-Adreßinformation $IN_n$, $IV_{n+k-1}$ durchgeführt wird, mit der bei einem Wiedergeben ein in einem als Zwischenspeicher 50 gewählten Bereich des Aufzeichnungsträgers 34; 71; 81 aufgezeichnetes Informations-Signalpaket $IP_{n+k-1}$, das in einem bestimmten Abstand vor dem beim Beenden des aufeinanderfolgend überschreibenden Speicherns in dem als Zwischenspeicher 50 gewählten Bereich des Aufzeichnungsträgers 34; 71; 81 als letztes aufgezeichneten Informations-Signalpaket $IP_{n+k-1}$ gereiht ist, hinter das in dem Aufzeichnungsträger 34; 71; 81 unmittelbar vor dem Auftreten einer Warte-Information 60 aufgezeichnete Informations-Signalpaket $IP_n$ reihbar ist (Fig. 1; Fig. 4; Fig. 6; Fig 7).

23. Verfahren nach Anspruch 19, **dadurch gekennzeichnet, daß** ein Überschreiben einer in dem Aufzeichnungsträger 34; 71; 81 aufgezeichneten Adreßinformation AD mit einer Reihungs-Adreßinformation $IN_n$, $IN_{n+2}$, $IN_{n+k}$, $IV_{n+1}$, $IV_{n+3}$, $IV_{N+k-1}$, $IV_{n+k-1}$ durchgeführt wird (Fig. 1 bis Fig. 7).

24. Verfahren nach Anspruch 18, **dadurch gekennzeichnet, daß** als Zwischenspeicher 50 ein Bereich des Aufzeichnungsträgers 34; 71; 81; 85 gewählt wird, der unmittelbar an jenen Bereich des Aufzeichnungsträgers 34; 71; 81; 85 anschließt, in dem ein unmittelbar vor dem Auftreten einer Warte-Information WI aufgezeichnetes Informations-Signalpaket $IP_n$ aufgezeichnet wurde (Fig. 1 bis Fig. 9).

25. Verfahren nach Anspruch 18, **dadurch gekennzeichnet, daß** zum Aufzeichnen eines Aufzeichnungs-Informationssignales W ein Zusammenwirken mit einem Speicher mit einem wahlfreien oder einem quasi-wahlfreien Zugriff als Aufzeichnungsträger 34; 71; 81 durchgeführt wird (Fig. 1 bis Fig. 7.

**Claims**

1. A device (2) for recording an information signal supplied by a signal source (69, 79; 84) in a record carrier (34; 71; 81; 85) without loss of part of an information signal (10) at the beginning of a recording, comprising
processing means (33) for processing an information signal and for supplying a recording information signal (W), as well as
input means (39; 72) for supplying activation information (AI) and wait information (WI), as well as
operating means (46) which cooperate with at least a part of the processing means (33) and with the input means (39; 73),
by which operating means it is possible to effect a recording of a recording information signal (W) in the record carrier (34; 71; 81; 85) in dependence upon the occurrence of activation information (AI), and
by means of which it is further possible to effect a consecutively overwriting storage of a recording information signal (W) in a temporary store (50) at least in dependence upon the occurrence of wait information (WI), and
with which furthermore an arbitrarily assignable area of the record carrier (34; 71; 81; 85) can be selected as temporary store (50),
wherein the operating means (46) are constructed to start a consecutively overwriting storage of a recording information signal (W) in an area of the record carrier (34; 71; 81; 85) selected as a temporary store (50) in dependence upon the occurrence of wait information (WI), and
wherein the operating means (46) are constructed to stop a consecutively overwriting storage of a recording information signal (W) in an area of the record carrier (34; 71; 81; 85) selected as a temporary store (50) in dependence upon the occurrence of activation information (AI),

**characterized in that** the operating means (46) are constructed to generate and record a recording information signal (W) which includes information signal packets (IP) and address signal packets (IV, IN),

the information signal packets (IP) corresponding to the information signals and the address signal packets (IV, IP) including address information (AD) by means of which - during a reproduction of information signal packets (IP) recorded in an area of the record carrier (34; 71; 81; 85) selected as temporary store (50) and information signal packets (IP) recorded in further areas of the record carrier (34; 71; 81; 85) - the time sequence of the reproduced information signal packets (IP) can be defined for the purpose of linking said information signal packets.

2. A device (2) as claimed in claim 1, **characterized in that** the operating means (46) are constructed to generate and to record at least one item of linkage address information ($IN_{n+2}$, $IV_{n+k+1}$; $IN_1$, $IN_3$) in dependence upon the occurrence of activation information (56; 61; 68; 90, 93) following wait information (55; 60; 67; 87, 93), by means of which at least one item of linkage address information ($IN_{n+2}$, $IV_{n+k+1}$; $IN_1$, $IN_3$) - during reproduction of information signal packets (IP) recorded in the record carrier (34; 71; 81; 85) - information signal packets (IP) reproduced from an area of the record carrier selected as temporary store (50) and further reproduced information signal packets (IP) can be linked together in their appropriate time sequence and by means of which also the first information signal packet ($IP_{n+k+1}$; $IP_2$, $IP_4$) recorded in the record carrier (34; 71; 81; 85) in dependence upon the occurrence of activation information (56; 61; 68; 90; 93) can be linked, during reproduction, after the last information signal packet ($IP_{n+2}$; $IP_1$, $IP_3$) recorded in the area of the record carrier (34; 71; 81; 85) selected as temporary store (50). (Fig. 1 to Fig. 7).

3. A device (2) as claimed in claim 2, **characterized in that** the operating means (46) are constructed to generate and to record at least one item of linkage address information ($IN_n$, $IV_{n+k-1}$; $IN_n$, $IV_{n+3}$) by means of which during reproduction an information signal packet ($IP_{n+k-1}$; $IP_{n+3}$) recorded in an area of the record carrier (34; 71; 81) selected as temporary store (50) can be linked after the information signal packet ($IP_n$) recorded in the record carrier (34; 71; 81) directly before the occurrence of wait information (60; 67). (Fig. 1; Fig. 4 to Fig. 7).

4. A device (2) as claimed in claim 3, **characterized in that** the operating means (46) are constructed to generate and to record at least one item of linkage address information ($IN_n$, $IV_{n+3}$) by means of which during reproduction an information signal packet ($IP_{n+3}$) recorded in an area of the record carrier (34; 71; 81) selected as temporary store (50) and arranged as the next information signal packet ($IP_{n+3}$) to be overwritten upon termination of the consecutively overwriting storage in the area of the record carrier (34; 71; 81) selected as temporary store (50) can be linked after the information signal packet ($IP_n$) recorded in the record carrier (34; 71; 81) directly before the occurrence of wait information (67). (Fig. 1; Fig. 5 to Fig. 7).

5. A device as claimed in claim 3, **characterized in that** the operating means (46) are constructed to generate and to record at least one item of linkage address information ($IN_n$, $IV_{n+k-1}$) by means of which during reproduction an information signal packet ($IP_{n+k-1}$) recorded in an area of the record carrier (34; 71; 81) selected as temporary store (50) and arranged at a given distance before the last information signal packet ($IP_{n+k-1}$) recorded upon termination of the consecutively overwriting storage in the area of the record carrier (34; 71; 81) selected as temporary store (50) can be linked after the information signal packet ($IP_n$) recorded in the record carrier (34; 71; 81) directly before the occurrence of wait information (60). (Fig. 1; Fig. 4; Fig. 6; Fig. 7).

6. A device (2) as claimed in claim 2, **characterized in that** the operating means (46) are constructed to overwrite address information (AD) recorded in the record carrier (34; 71; 81) with linkage address information ($IN_n$, $IN_{n+2}$, $IN_{n+k}$, $IV_{n+1}$, $IV_{n+3}$, $IV_{n+k-1}$, $IV_{n+k+1}$). (Fig. 1 to Fig. 7).

7. A device (2) as claimed in claim 1, **characterized in that** the operating means (46) are constructed to select as temporary store (50) an area of the record carrier (34; 71; 81, 85) which directly adjoins that area of the record carrier (34; 71; 81, 85) in which an information signal packet ($IP_n$) has been recorded immediately before the occurrence of wait information (WI). (Fig. 1 to Fig. 9).

8. A device (2) as claimed in claim 1, **characterized in that** the operating means (46) are constructed to cooperate with a random-access or quasi random access memory as record carrier (34; 71; 81). (Fig. 1 to Fig. 7).

9. A device (2) as claimed in claim 1, **characterized in that** the device (2) includes a built-in record carrier (34; 81). (Fig. 1; Fig. 7).

10. A device (2) as claimed in claim 1, **characterized in that** holder means (70) are provided, which can hold a record carrier (71; 85) and from which a record carrier (71; 85) being held can be removed again. (Fig. 6; Fig. 8).

11. A device (2) as claimed in claim 10, **characterized in that** the holder means (70) are adapted to hold a solid-state memory (71) accommodated in a protective carrier as a record carrier. (Fig. 6).

12. A device (2) as claimed in claim 10, **characterized in that** the holder means (70) are adapted to hold an optically scanned disc as a record carrier (81). (Fig. 7).

13. A device (2) as claimed in claim 10, **characterized in that** the holder means (70) are adapted to hold a magnetically scanned disc as a record carrier (34).

14. A device (2) as claimed in claim 10, **characterized in that** the holder means (70) are adapted to hold a magnetic-tape cassette (5) which accommodates a magnetic tape as a record carrier (85). (Fig. 8).

15. A device (2) as claimed in claim 1, **characterized in that** the device (2) is constructed as a video recorder for recording video signals and audio signals. (Fig. 1; Fig. 8).

16. A device (2) as claimed in claim 1, **characterized in that** the device (2) is constructed as a dictation device for recording speech signals, preferably as a speech-controlled dictation device which can be activated by speech signals to be recorded. (Fig. 6).

17. A device (2) as claimed in claim 1, **characterized in that** the device (2) is constructed as a data storage device for recording digital data supplied by a signal source (79). (Fig. 7).

18. A method of recording an information signal in a record carrier (34; 71; 81; 85) without loss of part of an information signal (10) at the beginning of a recording, the method comprising the following steps:

processing an information signal and supplying a recording information signal (W), as well as generating activation information (AI) and wait information (WI), as well as

recording a recording information signal (W) in dependence upon the occurrence of activation information (AI), as well as

storing in a consecutively overwriting fashion a recording information signal (W) in a temporary store (50) at least in dependence upon the occurrence of wait information (WI), as well as

selecting an arbitrarily assignable area of the record carrier (34; 71; 81; 85) as temporary store (50), as well as

starting a consecutively overwriting storage of a recording information signal (W) in an area of the record carrier (34; 71; 81; 85) selected as temporary store (50) in dependence upon the occurrence of wait information (WI), as well as

stopping a consecutively overwriting storage of a recording information signal (W) in an area of the record carrier (34; 71; 81; 85) selected as temporary store (50) in dependence upon the occurrence of activation information (AI),

**characterized in that**

the method includes the following further steps:

generating and recording a recording information signal (W) which includes information signal packets (IP) and address signal packets (IV, IN),

the information signal packets (IP) corresponding to the information signals and the address signal packets (IV, IN) including address information (AD) by means of which - during a reproduction of information signal packets (IP) recorded in an area of the record carrier (34; 71; 81; 85) selected as temporary store (50) and information signal packets (IP) recorded in further areas of the record carrier (34; 71; 81; 85) - the time sequence of the reproduced information signal packets (IP) can be defined for the purpose of linking said information signal packets.

19. A method as claimed in claim 18, **characterized in that** generating and recording of at least one item of linkage address information ($IN_{n+2}$, $IV_{n+k+1}$; $IN_1$, $IN_3$) in dependence upon the occurrence of activation information (56; 61; 68; 90, 93) following wait information (55; 60; 67; 87, 93) is effected, by means of which at least one item of

linkage address information ($IN_{n+2}$, $IV_{n+k+1}$; $IN_1$, $IN_3$) - during reproduction of information signal packets (IP) recorded in the record carrier (34; 71; 81; 85) - information signal packets (IP) reproduced from an area of the record carrier (34; 71; 81; 85) selected as temporary store (50) and further reproduced information signal packets (IP) can be linked together in their appropriate time sequence and by means of which also the first information signal packet ($IP_{n+k+1}$; $IP_2$, $IP_4$) recorded in the record carrier (34; 71; 81; 85) in dependence upon the occurrence of activation information (56; 61; 68; 90; 93) can be linked, during reproduction, after the last information signal packet ($IP_{n+2}$; $IP_1$, $IP_3$) recorded in the area of the record carrier (34; 71; 81; 85) selected as temporary store (50). (Fig. 1 to Fig. 7).

20. A method as claimed in claim 19, **characterized in that** generating and recording of at least one item of linkage address information ($IN_n$, $IV_{n+k-1}$; $IN_n$, $IV_{n+3}$) is effected, by means of which during reproduction an information signal packet ($IP_{n+k-1}$; $IP_{n+3}$) recorded in an area of the record carrier (34; 71; 81) selected as temporary store (50) can be linked after the information signal packet ($IP_n$) recorded in the record carrier (34; 71; 81) directly before the occurrence of wait information (60; 67). (Fig. 1; Fig. 4 to Fig. 7).

21. A method as claimed in claim 20, **characterized in that** generating and recording of at least one item of linkage address information ($IN_n$, $IV_{n+3}$) is effected, by means of which during reproduction an information signal packet ($IP_{n+3}$) recorded in an area of the record carrier (34; 71; 81) selected as temporary store (50) and arranged as the next information signal packet ($IP_{n+3}$) to be overwritten upon termination of the consecutively overwriting storage in the area of the record carrier (34; 71; 81) selected as temporary store (50) can be linked after the information signal packet ($IP_n$) recorded in the record carrier (34; 71; 81) directly before the occurrence of wait information (67). (Fig. 1; Fig. 5 to Fig. 7).

22. A method as claimed in claim 20, **characterized in that** generating and recording of at least one item of linkage address information ($IN_n$, $IV_{n+k-1}$) is effected, by means of which during reproduction an information signal packet ($IP_{n+k-1}$) recorded in an area of the record carrier (34; 71; 81) selected as temporary store (50) and arranged at a given distance before the last information signal packet ($IP_{n+k-1}$) recorded upon termination of the consecutively overwriting storage in the area of the record carrier (34; 71; 81) selected as temporary store (50) can be linked after the information signal packet ($IP_n$) recorded in the record carrier (34; 71; 81) directly before the occurrence of wait information (60). (Fig. 1; Fig. 4; Fig. 6; Fig. 7).

23. A method as claimed in claim 19, **characterized in that** address information (AD) recorded in the record carrier (34; 71; 81) is overwritten with linkage address information ($IN_n$, $IN_{n+2}$, $IN_{n+k}$, $IV_{n+1}$, $IV_{n+3}$, $IV_{n+k-1}$, $IV_{n+k+1}$). (Fig. 1 to Fig. 7).

24. A method as claimed in claim 18, **characterized in that** as temporary store (50) an area of the record carrier (34; 71; 81, 85) is selected which directly adjoins that area of the record carrier (34; 71; 81, 85) in which an information signal packet ($IP_n$) has been recorded immediately before the occurrence of wait information (WI). (Fig. 1 to Fig. 9).

25. A method as claimed in claim 18, **characterized in that** for recording a recording information signal (W) a cooperation with a random-access or quasi-random access memory as record carrier (34; 71; 81) is effected. (Fig. 1 to Fig. 7).

## Revendications

1. Dispositif 2 d'enregistrement d'un signal d'information fourni par une source de signaux 69; 79; 84 dans un support d'enregistrement 34; 71; 81; 85 sans perte d'un segment du signal d'information 10 au début de l'enregistrement contenant

   - des moyens de traitement 33 pour traiter un signal d'information et délivrer un signal d'information d'enregistrement W et
   - des moyens d'introduction 39; 72 pour délivrer une information d'activation AI et une information d'attente WI,
   - des moyens d'exploitation coopérant avec au moins une partie des moyens de traitement 33 et des moyens d'introduction 39; 73,
   - avec lesquels, en fonction de l'apparition d'une information d'activation AI, un enregistrement d'un signal d'information d'enregistrement W peut être enregistré dans le support d'enregistrement 34; 71; 81; 85 et
   - avec lesquels un enregistrement consécutif par écrasement d'un signal d'information d'enregistrement W peut par ailleurs être réalisé dans une mémoire intermédiaire 50, au moins en fonction de l'apparition d'une information d'attente WI et

- avec lesquels une zone à déterminer au choix du support d'enregistrement 34; 71; 81; 85 peut être sélectionnée par ailleurs comme mémoire intermédiaire 50,
- les moyens d'exploitation 46 étant conçus au début d'un enregistrement consécutif par écrasement d'un signal d'information d'enregistrement W dans une zone du support d'enregistrement 34; 71; 81; 85 choisie comme mémoire intermédiaire 50 en fonction de l'apparition d'une information d'attente WI et
- les moyens d'exploitation 46 étant conçus à la fin d'un enregistrement consécutif par écrasement d'un signal d'information d'enregistrement W dans une zone du support d'enregistrement 34; 71; 81; 85 choisie comme mémoire intermédiaire 50 en fonction de l'apparition d'une information d'activation AI,

   **caractérisé en ce**

- **que** les moyens d'exploitation 46 sont conçus pour la production et l'enregistrement d'un signal d'information d'enregistrement W qui contient des paquets de signaux d'information IP et des paquets de signaux d'adresse IV, IN,

les paquets de signaux d'information IP correspondant aux signaux d'information et aux informations d'adresse AD étant contenus dans les paquets de signaux d'adresse IV, IP, avec lesquels - en cas de lecture de paquets de signaux d'information IP enregistrés dans une zone du support d'enregistrement 34; 71; 81; 85 choisie comme mémoire intermédiaire 50 et de paquets de signaux d'information IP enregistrés dans d'autres zones du support d'enregistrement 34; 71; 81; 85 - la séquence temporelle des paquets de signaux d'information IP lus pouvant être déterminée pour le classement de ceux-ci.

2. Dispositif 2 selon la revendication 1, **caractérisé en ce que** les moyens d'exploitation 46 pour la production et l'enregistrement d'au moins une information d'adresse de classement INn+2; IVa+k+1; IN1, IN3 sont conçus en fonction de l'apparition d'une information d'activation 56; 61; 68; 90; 93 suivant une information d'attente 55; 60; 67; 87; 93 avec laquelle information d'adresse de classement INn+2; IVa+k+1; IN1, IN3 au moins - en cas de lecture de paquets de signaux d'information IP enregistrés par le support d'enregistrement 34; 71; 81; 85 - tant des paquets de signaux d'information IP lus à partir d'une zone du support d'enregistrement choisie comme mémoire intermédiaire 50 que d'autres paquets de signaux d'information IP lus peuvent être classés dans leur séquence temporelle tandis que que le paquet de signaux d'information IPa+k+1; IP2, IP4 enregistré en premier lieu dans le support d'enregistrement 34; 71; 81; 85 en fonction de l'apparition d'une information d'activation 56; 61; 68; 90; 93 peut être classé lors de la lecture derrière le paquet de signaux d'information IPa+2; IP1, IP3 enregistré en dernier lieu dans la zone du support d'enregistrement 34; 71; 81; 85 enregistrée comme mémoire intermédiaire 50 (Fig. 1 à Fig. 7).

3. Dispositif 2 selon la revendication 2, **caractérisé en ce que** les moyens d'exploitation 46 sont conçus pour produire et enregistrer au moins une information d'adresse de classement INn; IVa+k+1; INn0, INn+3 avec laquelle, en cas de lecture, un paquet de signaux d'information INn+k+1; IPn+3 enregistré dans une zone du support d'enregistrement 34; 71; 81; 85 choisie comme mémoire intermédiaire 50 peut être ordonné derrière le paquet de signaux d'information IPn enregistré dans le support d'enregistrement 34; 71; 81 directement devant l'apparition d'une information d'attente 60; 67 (Fig. 1; Fig. 4 à Fig. 7).

4. Dispositif 2 selon la revendication 3, **caractérisé en ce que** les moyens d'exploitation 46 sont conçus pour produire et enregistrer au moins une information d'adresse de classement INn; IVn+3 avec laquelle, en cas de lecture, un paquet de signaux d'information IPn+3 enregistré dans une zone du support d'enregistrement 34, 71; 81; 85 choisie comme mémoire intermédiaire 50 qui est ordonné en cas de fin de l'enregistrement consécutif par écrasement dans la zone du support d'enregistrement 34; 71; 81 choisie comme mémoire intermédiaire 50 est classé comme paquet de signaux d'information à écraser consécutif IPn+3 derrière lequel le paquet de signaux d'information IPn enregistré dans le support d'information 34; 71; 81 immédiatement avant l'apparition d'une information d'attente 67 peut être classé (Fig. 1; Fig. 5 à Fig. 7).

5. Dispositif selon la revendication 3, **caractérisé en ce que** les moyens d'exploitation 46 sont conçus pour produire et enregistrer au moins une information d'adresse de classement INn, IVn+k+1 avec laquelle, en cas de lecture, un paquet de signaux d'information IP n+k+1 enregistré dans une zone du support d'enregistrement 34; 71; 81 choisie comme mémoire intermédiaire 50 qui est classé à un intervalle déterminé du paquet de signaux d'information IPn+k+1 enregistré en dernier lieu dans la zone du support d'enregistrement 34; 71; 81 choisie comme

EP 0 906 620 B1

mémoire intermédiaire 50 à la fin de l'enregistrement consécutif par écrasement derrière lequel le paquet de signaux d'information IPn enregistré immédiatement avant l'apparition d'une information d'attente 60 peut être classé dans le support d'enregistrement 34; 71; 81 (Fig 1; Fig. 4, Fig. 6; Fig. 7).

6. Dispositif 2 selon la revendication 2, **caractérisé en ce que** les moyens d'exploitation 46 sont conçus pour écraser une information d'adresse AD enregistrée dans le support d'enregistrement 34; 71; 81 avec une information d'adresse de classement INn, INn+2, INn+k, IVn+1, IVn+3, IVn+k-1, IVn+k+1 (Fig. 1 à Fig. 7).

7. Dispositif 2 selon la revendication 1, **caractérisé en ce qu'**une zone du support d'enregistrement 34; 71; 81; 85 peut être choisie comme mémoire intermédiaire 50 avec les moyens d'exploitation 46, laquelle est directement adjacente à une zone du support d'enregistrement 34; 71; 81; 85 dans laquelle est enregistré un paquet de signaux d'information IPn enregistré immédiatement avant l'apparition d'une information d'attente WI (Fig. 1 à Fig. 9).

8. Dispositif 2 selon la revendication 1, **caractérisé en ce que** les moyens d'exploitation 46 sont conçus pour coopérer avec une mémoire à accès aléatoire ou quasi-aléatoire comme support d'enregistrement 34; 71; 81 (Fig. 1 à Fig. 7).

9. Dispositif 2 selon la revendication 1, **caractérisé en ce que** le dispositif 12 contient un support d'enregistrement 34, 81 intégré (Fig. 1; Fig. 7).

10. Dispositif 2 selon la revendication 1, **caractérisé en ce qu'**il est prévu des moyens de logement 70 dans lesquels un support d'enregistrement 71; 85 peut être logé et dont un support d'enregistrement 71; 85 logé peut être extrait (Fig. 6; Fig. 8).

11. Dispositif 2 selon la revendication 10, **caractérisé en ce que** les moyens de logement 70 sont conçus pour loger une mémoire à semi-conducteurs 71 logée dans un support de protection comme support d'enregistrement (Fig. 6).

12. Dispositif 2 selon la revendication 10, **caractérisé en ce que** les moyens de logement 70 sont conçus pour loger un disque à lecture optique comme support d'enregistrement 81 (Fig. 7).

13. Dispositif 2 selon la revendication 10, **caractérisé en ce que** les moyens de logement 70 sont conçus pour loger un disque à lecture optique comme support d'enregistrement 34.

14. Dispositif 2 selon la revendication 10, **caractérisé en ce que** les moyens de logement 70 sont conçus pour loger une cassette à bande magnétique 5 dans laquelle est logée une bande magnétique comme support d'enregistrement 85 (Fig. 8).

15. Dispositif 2 selon la revendication 1, **caractérisé en ce que** le dispositif 2 est conçu comme un magnétoscope pour l'enregistrement de signaux d'image et de signaux de son (Fig. 1; Fig. 8).

16. Dispositif 2 selon la revendication 1, **caractérisé en ce que** le dispositif 2 est conçu comme un dictaphone, de préférence comme un dictaphone à commande vocale activable par les signaux de parole à enregistrer pour l'enregistrement de signaux de parole (Fig. 6).

17. Dispositif 2 selon la revendication 1, **caractérisé en ce que** le dispositif 2 est conçu comme un dispositif d'enregistrement de données pour enregistrer des données numériques fournies par une source de signaux 79 (Fig. 7).

18. Procédé d'enregistrement d'un signal d'information dans un support d'enregistrement 34; 71; 81; 85 sans perte d'un segment de signal d'information 10 au début d'un enregistrement,
le procédé contenant les étapes exposées ci-dessous:

- traitement d'un signal d'information et délivrance d'un signal d'information d'enregistrement W et
- production d'une information d'activation AI et d'une information d'attente WI,
- enregistrement d'un signal d'information d'enregistrement W en fonction de l'apparition d'une information d'activation AI et
- enregistrement consécutif par écrasement d'un signal d'information d'enregistrement W dans une mémoire intermédiaire 50, du moins en fonction de l'apparition d'une information d'attente WI,
- sélection d'une zone à déterminer au choix du support d'enregistrement 34; 71; 81; 85 comme mémoire intermédiaire 50 et

- début d'un enregistrement consécutif par écrasement d'un signal d'information d'enregistrement W dans une zone du support d'enregistrement 34; 71; 81; 85 choisie comme mémoire intermédiaire 50 en fonction de l'apparition d'une information d'attente WI et
- fin d'un enregistrement consécutif par écrasement d'un signal d'information d'enregistrement W dans une zone du support d'enregistrement 34, 71, 81, 85 choisie comme mémoire intermédiaire 50 en fonction de l'apparition d'une information d'activation,

**caractérisé en ce**
   **que** le procédé contient les étapes supplémentaires exposées ci-dessous:

production et enregistrement d'un signal d'information d'enregistrement W qui contient des paquets de signaux d'information IP et des paquets de signaux d'adresse IV, IN,
les paquets de signaux d'information correspondant aux signaux d'information et des informations d'adresse AD étant contenues dans les paquets de signaux d'adresse IV, IN, avec lesquelles - en cas de lecture de paquets de signaux d'information IP enregistrés dans une zone du support d'enregistrement 34; 71; 81; 185 choisie comme mémoire intermédiaire 50 - la séquence temporelle des paquets de signaux d'information IP lus peut être déterminée pour leur ordre de classement.

19. Procédé selon la revendication 18, **caractérisé en ce qu'**une production et un enregistrement d'au moins une information d'adresse de classement INn+2; IVa+k+1; IN1, IN3 sont effectués en fonction de l'apparition d'une information d'activation 56; 61; 68; 90; 93, suivant une information d'attente 55; 60; 67; 87; 93, avec laquelle au moins une information d'adresse de classement INn+2; IVa+k+1; IN1, IN3 - en cas de lecture de paquets de signaux d'information IP enregistrés dans le support d'enregistrement 34; 71; 81; 85 - tant les paquets de signaux d'information IP lus à partir d'une zone du support d'enregistrement choisie comme mémoire intermédiaire 50 que d'autres paquets de signaux d'information IP lus peuvent être ordonnés dans leur séquence temporelle tandis que le paquet de signaux d'information IPa+k+1; IP2, IP4 enregistré en premier lieu dans le support d'enregistrement 34; 71; 81; 85 en fonction de l'apparition d'une information d'activation 56; 61; 68; 90; 93 peut être classé lors de la lecture derrière le paquet de signaux d'information IPa+2; IP1, IP3 enregistré en dernier lieu dans la zone du support d'enregistrement 34; 71; 81; 85 enregistrée comme mémoire intermédiaire 50 (Fig. 1 à Fig. 7).

20. Procédé selon la revendication 19, **caractérisé en ce qu'**une production et un enregistrement INn; IVa+k+1; INn, IVn+3 sont effectués par au moins une information d'adresse de classement avec laquelle, lors de la lecture, un paquet de signaux d'information enregistrés IPn+k+1, IPn+3 enregistré dans la zone du support d'enregistrement 34; 71; 81 sélectionnée comme mémoire intermédiaire 50 est ordonné derrière le paquet de signaux d'information IPn enregistré dans le support d'enregistrement 34; 71; 81 immédiatement avant l'apparition 67 d'une information d'attente (Fig. 1; Fig. 4 à Fig. 7).

21. Procédé selon la revendication 20, **caractérisé en ce qu'**une production et un enregistrement sont effectués d'au moins une information d'adresse de classement INn; IVn+3 avec laquelle, lors d'une lecture, un paquet de signaux d'information IPn+3 enregistré dans une zone du support d'enregistrement 34; 71; 81 choisie comme mémoire intermédiaire 50 qui est classé à la fin de l'enregistrement consécutif par écrasement dans la zone du support d'enregistrement 34; 71; 81 choisie comme mémoire intermédiaire 50 comme paquet de signaux d'informations IPn+3 à écraser suivant peut être ordonné derrière le paquet de signaux d'information IPn enregistré dans le support d'enregistrement 34; 71; 81 immédiatement avant l'apparition d'une information d'attente 67 (Fig. 1, Fig. 5 à Fig. 7).

22. Procédé selon la revendication 20, **caractérisé en ce qu'**une production et un enregistrement sont effectués d'au moins une information d'adresse de classement INn, IVn+k+1, avec laquelle, lors d'une lecture, un paquet de signaux d'information IPn+k+1 enregistré dans une zone du support d'enregistrement 34; 71; 81 dans une zone choisie comme mémoire intermédiaire 50 qui est ordonné à un intervalle déterminé avant le paquet de signaux d'information IPn+k+1 enregistré en dernier lieu à la fin de l'enregistrement consécutif par écrasement dans la zone du support d'enregistrement 34; 71; 81 choisie comme mémoire intermédiaire 50 peut être ordonné derrière le paquet de signaux d'information IPn enregistré dans le support d'enregistrement 34; 71; 81, immédiatement avant l'apparition d'une information d'attente 60 (Fig. 1; Fig. 4; Fig. 6; Fig. 7).

23. Procédé selon la revendication 19, **caractérisé en ce qu'**un écrasement d'un information d'adresse AD enregistrée dans le support d'enregistrement 34; 71; 81 est effectué avec une information d'adresse de classement INn, INn+2; IVn+1, IVn+3, IVn+k+1, IVn+k-1 (Fig. 1 à Fig. 7).

**24.** Procédé selon la revendication 18, **caractérisé en ce qu'**une zone du support d'enregistrement 34; 71; 81; 85 est sélectionnée comme mémoire intermédiaire 50 et est directement adjacente à la zone du support d'enregistrement 34,; 71; 81; 85 dans laquelle a été enregistré un paquet de signaux d'information IPn enregistré immédiatement avant l'apparition d'une information d'attente WI (Fig. 1 à Fig. 9).

**25.** Procédé selon la revendication 18, **caractérisé en ce que**, pour l'enregistrement d'un signal d'information d'enregistrement W, une coopération est mise en place avec une mémoire dotée d'un accès aléatoire ou quasi-aléatoire comme support d'enregistrement 34; 71; 81 (Fig. 1 à Fig. 7).

# FIG. 1

# FIG. 2

EP 0 906 620 B1

FIG.3

FIG. 4

FIG.5

27

EP 0 906 620 B1

FIG. 6

FIG. 7

28

FIG. 8

FIG. 9